# EUROPEAN PATENT APPLICATION

(11) **EP 4 780 122 A1**
(43) Date of publication of application: **22.07.2026**
(21) Application number: 24871001.4
(22) Date of filing: 27.09.2024
(51) Int. Cl.: H04W 74/08

(54) **COMMUNICATION METHOD AND COMMUNICATION APPARATUS**

(30) Priority: 28.09.2023 CN 202311295552
(71) Applicant: HUAWEI TECHNOLOGIES CO., LTD., Shenzhen 518129 (CN)
(72) Inventor: ZHU, Huiying, Shenzhen, Guangdong 518129 (CN); DONG, Pengpeng, Shenzhen, Guangdong 518129 (CN); WU, Fangzhou, Shenzhen, Guangdong 518129 (CN)
(74) Representative: Pfenning, Meinig & Partner mbB
(86) International application number: PCT/CN2024/121864
(87) International publication number: WO 2025/067465

(57) **Abstract**

This application discloses a communication method and a communication apparatus. This application may be applied to a communication scenario supporting a random access procedure and a multi-node resource multiplexing scenario. The method includes: receiving a first message, where the first message includes a first random access preamble (preamble); and performing downlink transmission, where a resource for the downlink transmission does not include a downlink resource in a first window or a downlink resource in a first window and in a beam direction of the first message, the first window includes k time units used by a cell to which the first random access preamble belongs to send a second message, the second message and the first message belong to a same random access procedure, and k is an integer greater than 0. Because the resource for performing the downlink transmission does not include the downlink resource in the first window or the downlink resource in the first window and in the beam direction of the first message, interference caused by the downlink transmission to transmission of the second message can be avoided, thereby improving a random access success rate.

## Description

This application claims priority to Chinese Patent Application No. 202311295552.5, filed with the China National Intellectual Property Administration on September 28, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

Random access is a process in which a user equipment (user equipment, UE) establishes a connection to and achieves uplink synchronization with a cell (or referred to as a network). After the random access is completed, data interworking may be performed between a base station and the UE. The UE may implement, through the random access, three basic functions: (1) achieving uplink synchronization with the base station (for example, a gNB) through timing advance (timing advance, TA); (2) applying for an uplink resource (UL_GRANT) for sending a Msg 3; and (3) being allocated a unique identifier, namely, a cell radio network temporary identifier (cell radio network temporary identifier, C-RNTI). A purpose of the random access is to establish an uplink synchronization relationship between the UE and the cell and request the cell to allocate a dedicated resource to the UE for service transmission.

Currently, an existing technical solution has a problem of a low random access success rate. Therefore, a technical solution for improving a random access success rate needs to be studied.

### SUMMARY

Embodiments of this application disclose a communication method and a communication apparatus, to improve a random access success rate.

According to a first aspect, an embodiment of this application provides a communication method. The method includes: receiving a first message, where the first message includes a first random access preamble (preamble); and performing downlink transmission, where a resource for the downlink transmission does not include a downlink resource in a first window or a downlink resource in a first window and in a beam direction of the first message, the first window includes k time units used by a cell to which the first random access preamble belongs to send a second message, the second message and the first message belong to a same random access procedure, and k is an integer greater than 0.

That the resource for the downlink transmission does not include the downlink resource in the first window or the downlink resource in the first window and in the beam direction of the first message may be replaced with that the resource for the downlink transmission does not include the downlink resource in the first window and in all beam directions or in the beam direction of the first message. Performing the downlink transmission, where the resource for the downlink transmission does not include the downlink resource in the first window or the downlink resource in the first window and in the beam direction of the first message may be replaced with not performing downlink transmission in the first window or not performing downlink transmission in the first window and in the beam direction of the first message. Optionally, the first window is used to monitor a physical downlink control channel (physical downlink control channel, PDCCH) corresponding to the second message. For example, in the first window, a terminal device that sends the first message monitors the PDCCH corresponding to the second message and receives the second message. In this application, the time unit may be a slot, a subframe, or another time length (for example, a time length defined in a future communication standard). This is not limited in this application. The subframe may be 1 ms, and the slot may be 1 ms, 0.5 ms, 0.25 ms, 0.125 ms, 0.0625ms, or the like. The subframe and the slot in this application may comply with definitions in one or more existing communication standards, or may change with evolution of a communication standard.

In this embodiment of this application, the first window includes the k time units used by the cell to which the first random access preamble belongs to send the second message, and the resource for the downlink transmission does not include the downlink resource in the first window or the downlink resource in the first window and in the beam direction of the first message. This can avoid interference caused by the downlink transmission to transmission of the second message, thereby improving a random access success rate.

In a possible implementation, the method is applied to an entity corresponding to a first cell, and the first random access preamble does not belong to a random access preamble of the first cell.

In this implementation, that the first random access preamble does not belong to the random access preamble of the first cell indicates that downlink transmission performed in the first window by the entity corresponding to the first cell may cause interference to transmission of the second message. A resource for the entity corresponding to the first cell to perform the downlink transmission does not include the downlink resource in the first window or the downlink resource in the first window and in the beam direction of the first message, so that the interference to the transmission of the second message can be avoided.

In a possible implementation, the method further includes: detecting the received first message using a logical root sequence that is not of the first cell (namely, a local cell).

In this implementation, that a random access preamble belonging to another cell is received may be learned by detecting a received message (or signal) using a logical root sequence that is not of a local cell, thereby avoiding interference to a random access procedure of the another cell.

In a possible implementation, a time domain position of the first window and a time domain position of the first message meet a predefined relationship.

In this implementation, the time domain position of the first window and the time domain position of the first message meet the predefined relationship, so that the first cell obtains the time domain position of the first window based on the predefined relationship and the time domain position of the first message, and then does not use, during the downlink transmission, the downlink resource in the first window or the downlink resource in the first window and in the beam direction of the first message, to avoid interference to the transmission of the second message.

In a possible implementation, the method further includes: obtaining the time domain position of the first window based on the predefined relationship and the time domain position of the first message.

In this implementation, the time domain position of the first window may be obtained without increasing signaling overheads, so as to avoid interference to the transmission of the second message based on the first window.

In a possible implementation, the second message is a random access response (random access response, RAR) message or a contention resolution (contention resolution) message, and a first time unit in the first window is offset by f time units from a time unit in which the first random access preamble is located or a time unit in which a last symbol of the first random access preamble is located, where f is a predefined integer greater than 0. That the first time unit in the first window is offset by f time units from the time unit in which the first random access preamble is located or the time unit in which the last symbol of the first random access preamble is located may be an example of the foregoing predefined relationship. In other words, the foregoing predefined relationship may include that the first time unit in the first window is offset by f time units from the time unit in which the first random access preamble is located or the time unit in which the last symbol of the first random access preamble is located. In this application, the random access preamble may be referred to as a Msg 1, the random access response message may be referred to as a Msg 2, and the contention resolution message may be referred to as a Msg 4; or the random access preamble may be referred to as a Msg A, and the random access response message may be referred to as a Msg B.

In this implementation, it is predefined that the first time unit in the first window is offset by f time units from the time unit in which the first random access preamble is located or the time unit in which the last symbol of the first random access preamble is located. In this way, the first cell may obtain the first time unit in the first window based on the time domain position of the first message and the predefined relationship, and then does not use, during the downlink transmission, the downlink resource in the first window or the downlink resource in the first window and in the beam direction of the first message, to avoid interference to the transmission of the second message.

In a possible implementation, the second message is a contention resolution message, a first time unit in the k time units is offset by h time units from a time unit in which a random access response message is located or a time unit in which a last symbol of the random access response message is located, and the random access response message and the second message belong to a same random access procedure, where h is a predefined integer greater than 0. The first time unit in the k time units may be a first time unit used to send (or transmit) the second message. The foregoing predefined relationship may include that the first time unit in the k time units is offset by h time units from the time unit in which the random access response message is located or the time unit in which the last symbol of the random access response message is located. In other words, that the first time unit in the k time units is offset by h time units from the time unit in which the random access response message is located or the time unit in which the last symbol of the random access response message is located is included in the foregoing predefined relationship.

In this implementation, it is predefined that the first time unit used to send the second message is offset by h time units from the time unit in which the random access response message is located or the time unit in which the last symbol of the random access response message is located. In this way, the first cell may obtain, based on a time domain position of the random access response message and the predefined relationship, the first time unit used to send the second message, thereby avoiding interference to the transmission of the second message.

In a possible implementation, a first time unit used by the cell to which the first random access preamble belongs to send the random access response message is offset by g time units from a time unit in which the first random access preamble is located or a time unit in which a last symbol of the first random access preamble is located, where g is a predefined integer greater than 0. The foregoing predefined relationship may further include that the first time unit used by the cell to which the first random access preamble belongs to send the random access response message is offset by g time units from the time unit in which the first random access preamble is located or the time unit in which the last symbol of the first random access preamble is located. In other words, that the first time unit used by the cell to which the first random access preamble belongs to send the random access response message is offset by g time units from the time unit in which the first random access preamble is located or the time unit in which the last symbol of the first random access preamble is located is included in the foregoing predefined relationship.

In this implementation, it is predefined that the first time unit used by the cell to which the first random access preamble belongs to send the random access response message is offset by g time units from the time unit in which the first random access preamble is located or the time unit in which the last symbol of the first random access preamble is located. In this way, the first cell may obtain, based on a time domain position of the first random access preamble and the predefined relationship, the first time unit used by the cell to send the random access response message, thereby avoiding interference to the transmission of the second message.

In a possible implementation, the first window is a random access response window, and the second message is a random access response message.

In a possible implementation, the second message is a random access response message, the first window further includes s time units used by the cell to which the first random access preamble belongs to send a contention resolution message, and the contention resolution message and the first message belong to a same random access procedure, where s is an integer greater than 0. Optionally, the first window is further used to monitor a PDCCH corresponding to the contention resolution message. For example, the terminal device that sends the first message further monitors, in the first window, the PDCCH corresponding to the contention resolution message, and receives the contention resolution message.

In this implementation, the first window further includes the s time units used by the cell to which the first random access preamble belongs to send the contention resolution message. The resource for the entity corresponding to the first cell to perform the downlink transmission does not include the downlink resource in the first window or the downlink resource in the first window and in the beam direction of the first message, so that interference caused by the downlink transmission performed by the first cell to transmission of the second message and the contention resolution message can be avoided, thereby improving the random access success rate.

In a possible implementation, a start position of the first window is offset by t time units from a time unit in which the first random access preamble is located or a time unit in which a last symbol of the first random access preamble is located, where t is a predefined integer greater than 0, or a start position of the first window is a first downlink time unit after the cell to which the first random access preamble belongs sends the first message. The start position of the first window may be replaced with the first time unit in the first window.

In this implementation, it is predefined that the start position of the first window is offset by t time units from the time unit in which the first random access preamble is located or the time unit in which the last symbol of the first random access preamble is located, so that the first cell determines the start position of the first window based on the time domain position of the first random access preamble and the predefined time offset relationship, thereby avoiding interference to the transmission of the second message.

In a possible implementation, the method is applied to a communication scenario in which a plurality of network devices are included, and at least two of the plurality of network devices cannot directly exchange information. For example, the network devices in the communication scenario cannot exchange information. That two network devices cannot directly exchange information may be due to absence of a wired connection, a wireless interface, or a backhaul interface between the two network devices.

If two network devices cannot directly exchange information, when the two network devices have a coverage overlapping area, the two network devices cannot avoid, through inter-cell coordination, interference to a random access procedure initiated by a UE in the coverage overlapping area. In this implementation, the resource for the entity (a network device) corresponding to the first cell to perform the downlink transmission does not include the downlink resource in the first window or the downlink resource in the first window and in the beam direction of the first message, so that interference to the transmission of the second message can be avoided without requiring interaction with an entity corresponding to another cell, thereby resolving a problem that interference cannot be avoided through information exchange between the entity corresponding to the first cell and the entity corresponding to the another cell.

In a possible implementation, the method is applied to any one of the following multi-node resource multiplexing scenarios: relay (relay), a wireless mesh (mesh) network, integrated access and backhaul (integrated access and backhaul, IAB), an ad hoc network, or a communication scenario including mobile IAB and/or a mobile base station. A multi-node resource multiplexing scenario means a networking scenario in which resource multiplexing is performed (or a resource is multiplexed) between multiple nodes.

In this implementation, the entity corresponding to the first cell does not use, during the downlink transmission, the downlink resource in the first window or the downlink resource in the first window and in the beam direction of the first message, to avoid interference to the transmission of the second message. The entity corresponding to the first cell does not need to exchange information with an entity (for example, a base station) corresponding to another cell to achieve interference coordination, thereby reducing signaling overheads.

According to a second aspect, an embodiment of this application provides another communication method. The method includes: receiving a first message, where the first message includes a first random access preamble; and sending, in a first window, a second message, where the second message and the first message belong to a same random access procedure, a time domain position of the first window and a time domain position of the first message meet a predefined relationship, and the second message is a contention resolution message. Optionally, the first window is used to monitor a PDCCH corresponding to the second message.

In this embodiment of this application, the time domain position of the first window and the time domain position of the first message meet the predefined relationship, so that a network device (for example, a base station) that receives the first message can obtain the time domain position of the first window based on the time domain position of the first message and the predefined relationship, and then does not use, during downlink transmission, a downlink resource in the first window or a downlink resource in the first window and in a beam direction of the first message, to avoid interference to transmission of the second message.

In a possible implementation, the method further includes: sending, in the first window, a random access response message, where the random access response message and the first message belong to a same random access procedure.

In this implementation, the random access response message and the contention resolution message (namely, the second message) are sent in the first window. In this way, after obtaining the time domain position of the first window based on the time domain position of the first message and the predefined relationship, the network device (for example, the base station) that receives the first message may not use, during the downlink transmission, the downlink resource in the first window or the downlink resource in the first window and in the beam direction of the first message, to avoid interference to transmission of the random access response message and the contention resolution message.

According to a third aspect, an embodiment of this application provides another communication method. The method includes: sending a first message, where the first message includes a first random access preamble; and receiving a second message, where the second message and the first message belong to a same random access procedure, the second message is sent in a first window by a cell to which the first random access preamble belongs, a time domain position of the first window and a time domain position of the first message meet a predefined relationship, and the second message is a contention resolution message. Optionally, the first window is used to monitor a PDCCH corresponding to the second message.

In this embodiment of this application, the time domain position of the first window and the time domain position of the first message meet the predefined relationship, so that a network device (for example, a base station) that receives the first message can obtain the time domain position of the first window based on the time domain position of the first message and the predefined relationship, and then does not use, during downlink transmission, a downlink resource in the first window or a downlink resource in the first window and in a beam direction of the first message, to avoid interference to transmission of the second message.

In a possible implementation of the third aspect, the method further includes: receiving a random access response message, where the random access response message is sent in the first window by the cell to which the first random access preamble belongs, and the random access response message and the first message belong to a same random access procedure.

In this implementation, the random access response message and the contention resolution message that are sent in the first window by the cell to which the first random access preamble belongs are received. Because the cell sends, in the first window, the random access response message and the contention resolution message, after obtaining the time domain position of the first window based on the time domain position of the first message and the predefined relationship, the network device (for example, the base station) that receives the first message may not use, during the downlink transmission, the downlink resource in the first window or the downlink resource in the first window and in the beam direction of the first message, to avoid interference to transmission of the random access response message and the contention resolution message.

In a possible implementation of the second aspect or the third aspect, a first time unit in the first window is offset by f time units from a time unit in which the first random access preamble is located or a time unit in which a last symbol of the first random access preamble is located, where f is a predefined integer greater than 0, and k is an integer greater than 0. The foregoing predefined relationship may include that the first time unit in the first window is offset by f time units from the time unit in which the first random access preamble is located or the time unit in which the last symbol of the first random access preamble is located.

In this implementation, it is predefined that the first time unit in the first window is offset by f time units from the time unit in which the first random access preamble is located or the time unit in which the last symbol of the first random access preamble is located, so that the network device that receives the first message can obtain the first time unit in the first window based on the time domain position of the first message and the predefined relationship, and then does not use, during the downlink transmission, the downlink resource in the first window or the downlink resource in the first window and in the beam direction of the first message, to avoid the interference to the transmission of the second message.

In a possible implementation of the second aspect or the third aspect, the method is applied to a communication scenario in which a plurality of network devices are included, and at least two of the plurality of network devices cannot directly exchange information.

In this implementation, the time domain position of the first window and the time domain position of the first message meet the predefined relationship, so that the network device that receives the first message obtains the time domain position of the first window based on the time domain position of the first message and the predefined relationship, and does not need to interact with a network device corresponding to another cell, thereby resolving a problem that interference cannot be avoided through information exchange between the network device that receives the first message and an entity corresponding to another cell.

In a possible implementation of the second aspect or the third aspect, the method is applied to any one of the following multi-node resource multiplexing scenarios: relay (relay), a wireless mesh (mesh) network, IAB, an ad hoc network, or a communication scenario including mobile IAB and/or a mobile base station.

In this implementation, the time domain position of the first window and the time domain position of the first message meet the predefined relationship, so that the network device that receives the first message obtains the time domain position of the first window based on the time domain position of the first message and the predefined relationship, and does not need to interact with the network device corresponding to the another cell, thereby reducing signaling overheads.

According to a fourth aspect, an embodiment of this application provides another communication method. The method includes: receiving a first message, where the first message includes a first random access preamble; and sending, in a first window, a random access response message and a contention resolution message, where the first message, the random access response message, and the contention resolution message belong to a same random access procedure, and a time domain position of the first window and a time domain position of the first message meet a predefined relationship. Sending, in the first window, the random access response message and the contention resolution message may be understood as: Sending of the random access response message and the contention resolution message is restricted to within the first window.

In this embodiment of this application, the time domain position of the first window and the time domain position of the first message meet the predefined relationship, so that a network device (for example, a base station) that receives the first message can obtain the time domain position of the first window based on the time domain position of the first message and the predefined relationship, and then does not use, during downlink transmission, a downlink resource in the first window or a downlink resource in the first window and in a beam direction of the first message, to avoid interference to transmission of the random access response message and the contention resolution message.

According to a fifth aspect, an embodiment of this application provides another communication method. The method includes: sending a first message, where the first message includes a first random access preamble; and receiving, in a first window, a random access response message and a contention resolution message, where the first message, the random access response message, and the contention resolution message belong to a same random access procedure, and a time domain position of the first window and a time domain position of the first message meet a predefined relationship.

In this embodiment of this application, the time domain position of the first window and the time domain position of the first message meet the predefined relationship, so that a network device (for example, a base station) that receives the first message can obtain the time domain position of the first window based on the time domain position of the first message and the predefined relationship, and then does not use, during downlink transmission, a downlink resource in the first window or a downlink resource in the first window and in a beam direction of the first message, to avoid interference to transmission of the random access response message and the contention resolution message.

In a possible implementation of the fourth aspect or the fifth aspect, a start position of the first window is offset by w time units from a time unit in which the first random access preamble is located or a time unit in which a last symbol of the first random access preamble is located, where w is a predefined integer greater than 0, or a start position of the first window is a first time unit after a cell to which the first random access preamble belongs sends the first message. The predefined relationship may include that there is an interval of w time units between the start position of the first window and the time unit in which the first random access preamble is located or the time unit in which the last symbol of the first random access preamble is located, where w is a predefined integer greater than 0, or the start position of the first window is the first time unit after the cell to which the first random access preamble belongs sends the first message.

In this implementation, the network device that receives the first message may obtain the start position of the first window based on the time domain position of the first message and the predefined relationship.

According to a sixth aspect, an embodiment of this application provides another communication method. The method includes: receiving a first message, where the first message includes a first random access preamble; and sending a second message, where the second message and the first message belong to a same random access procedure, and a time domain position of the second message and a time domain position of the first message meet a predefined relationship.

In this embodiment of this application, the time domain position of the second message and the time domain position of the first message meet the predefined relationship, so that a network device (for example, a base station) that receives the first message can obtain the time domain position of the second message based on the time domain position of the first message and the predefined relationship, thereby avoiding interference to transmission of the second message.

In a possible implementation, the second message is a random access response message, and the method further includes: sending a contention resolution message, where the contention resolution message and the first message belong to a same random access procedure, and a time domain position of the contention resolution message and the time domain position of the first message meet a predefined relationship, or a time domain position of the contention resolution message and the time domain position of the second message meet a predefined relationship.

In this implementation, the time domain position of the contention resolution message and the time domain position of the first message meet the predefined relationship, so that the network device (for example, the base station) that receives the first message can obtain the time domain position of the contention resolution message based on the time domain position of the first message and the predefined relationship, thereby avoiding interference to transmission of the contention resolution message. The time domain position of the contention resolution message and the time domain position of the second message meet the predefined relationship, so that the network device (for example, the base station) that receives the first message can obtain the time domain position of the contention resolution message based on the time domain position of the second message and the predefined relationship, thereby avoiding interference to transmission of the contention resolution message.

According to a seventh aspect, an embodiment of this application provides another communication method. The method includes: sending a first message, where the first message includes a first random access preamble; and receiving a second message, where the second message and the first message belong to a same random access procedure, and a time domain position of the second message and a time domain position of the first message meet a predefined relationship.

In this embodiment of this application, the time domain position of the second message and the time domain position of the first message meet the predefined relationship, so that a network device (for example, a base station) that receives the first message can obtain the time domain position of the second message based on the time domain position of the first message and the predefined relationship, thereby avoiding interference to transmission of the second message.

In a possible implementation, the second message is a random access response message, and the method further includes: receiving a contention resolution message, where the contention resolution message and the first message belong to a same random access procedure, and a time domain position of the contention resolution message and the time domain position of the first message meet a predefined relationship, or a time domain position of the contention resolution message and the time domain position of the second message meet a predefined relationship.

In this implementation, the time domain position of the contention resolution message and the time domain position of the first message meet the predefined relationship, so that the network device (for example, the base station) that receives the first message can obtain the time domain position of the contention resolution message based on the time domain position of the first message and the predefined relationship, thereby avoiding interference to transmission of the contention resolution message. The time domain position of the contention resolution message and the time domain position of the second message meet the predefined relationship, so that the network device (for example, the base station) that receives the first message can obtain the time domain position of the contention resolution message based on the time domain position of the second message and the predefined relationship, thereby avoiding interference to transmission of the contention resolution message.

In a possible implementation of the fourth aspect or the fifth aspect, that the time domain position of the second message and the time domain position of the first message meet the predefined relationship includes that a first time unit used for transmission of the second message is offset by y time units from a time unit in which the first random access preamble is located or a time unit in which a last symbol of the first random access preamble is located, where y is a predefined integer greater than 0. For example, y is a predefined integer greater than 0.

According to an eighth aspect, an embodiment of this application provides a communication apparatus. The communication apparatus has a function of implementing behavior in the method embodiment in the first aspect, the second aspect, the fourth aspect, or the sixth aspect. The communication apparatus may be a network device, or may be a component (for example, a processor, a chip, or a chip system) of the network device, or may be a logical module or software that can implement all or some functions of the network device. The function of the communication apparatus may be implemented by hardware, or may be implemented by hardware executing corresponding software. The hardware or the software includes one or more modules or units corresponding to the foregoing function.

In a possible implementation, the communication apparatus includes a transceiver module and a processing module. The transceiver module is configured to receive a first message, where the first message includes a first random access preamble. The processing module is configured to parse the first message. The transceiver module is further configured to perform downlink transmission, where a resource for the downlink transmission does not include a downlink resource in a first window or a downlink resource in a first window and in a beam direction of the first message, the first window includes k time units used by a cell to which the first random access preamble belongs to send a second message, the second message and the first message belong to a same random access procedure, and k is an integer greater than 0.

In a possible implementation, the processing module is further configured to detect the received first message using a logical root sequence that is not of a first cell (namely, a local cell).

In a possible implementation, a time domain position of the first window and a time domain position of the first message meet a predefined relationship. The processing module is further configured to obtain the time domain position of the first window based on the predefined relationship and the time domain position of the first message.

In a possible implementation, the communication apparatus includes a transceiver module and a processing module. The transceiver module is configured to receive a first message, where the first message includes a first random access preamble. The processing module is configured to parse the first message. The transceiver module is further configured to send, in a first window, a second message, where the second message and the first message belong to a same random access procedure, a time domain position of the first window and a time domain position of the first message meet a predefined relationship, and the second message is a contention resolution message.

In a possible implementation, the transceiver module is further configured to send, in the first window, a random access response message, where the random access response message and the first message belong to a same random access procedure.

In a possible implementation, the communication apparatus includes a transceiver module and a processing module. The transceiver module is configured to receive a first message, where the first message includes a first random access preamble. The processing module is configured to generate a random access response message and a contention resolution message. The transceiver module is further configured to send, in a first window, the random access response message and the contention resolution message, where the first message, the random access response message, and the contention resolution message belong to a same random access procedure, and a time domain position of the first window and a time domain position of the first message meet a predefined relationship.

In a possible implementation, the communication apparatus includes a transceiver module and a processing module. The transceiver module is configured to receive a first message, where the first message includes a first random access preamble. The processing module is configured to generate a second message. The transceiver module is further configured to send the second message, where the second message and the first message belong to a same random access procedure, and a time domain position of the second message and a time domain position of the first message meet a predefined relationship.

In a possible implementation, the second message is a random access response message. The transceiver module is further configured to send a contention resolution message, where the contention resolution message and the first message belong to a same random access procedure, and a time domain position of the contention resolution message and the time domain position of the first message meet a predefined relationship, or a time domain position of the contention resolution message and the time domain position of the second message meet a predefined relationship.

For a possible implementation of the communication apparatus in the eighth aspect, refer to the possible implementations in the first aspect, the second aspect, the fourth aspect, or the sixth aspect.

For technical effects brought by the possible implementations in the eighth aspect, refer to the descriptions of technical effects of the possible implementations in the first aspect, the second aspect, the fourth aspect, or the sixth aspect.

According to a ninth aspect, an embodiment of this application provides a communication apparatus. The communication apparatus has a function of implementing behavior in the method embodiment in the third aspect, the fifth aspect, or the seventh aspect. The communication apparatus may be a terminal device, or may be a component (for example, a processor, a chip, or a chip system) of the terminal device, or may be a logical module or software that can implement all or some functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a first message. The transceiver module is configured to: send the first message, where the first message includes a first random access preamble; and receive a second message, where the second message and the first message belong to a same random access procedure, the second message is sent in a first window by a cell to which the first random access preamble belongs, a time domain position of the first window and a time domain position of the first message meet a predefined relationship, and the second message is a contention resolution message.

In a possible implementation, the transceiver module is further configured to receive a random access response message, where the random access response message is sent in the first window by the cell to which the first random access preamble belongs, and the random access response message and the first message belong to a same random access procedure.

In a possible implementation, the communication apparatus includes a transceiver module and a processing module. The processing module is configured to generate a first message. The transceiver module is configured to: send the first message, where the first message includes a first random access preamble; and receive, in a first window, a random access response message and a contention resolution message, where the first message, the random access response message, and the contention resolution message belong to a same random access procedure, and a time domain position of the first window and a time domain position of the first message meet a predefined relationship.

In a possible implementation, the communication apparatus includes a transceiver module and a processing module. The processing module is configured to generate a first message. The transceiver module is configured to: send the first message, where the first message includes a first random access preamble; and receive a second message, where the second message and the first message belong to a same random access procedure, and a time domain position of the second message and a time domain position of the first message meet a predefined relationship.

In a possible implementation, the second message is a random access response message. The transceiver module is further configured to receive a contention resolution message, where the contention resolution message and the first message belong to a same random access procedure, and a time domain position of the contention resolution message and the time domain position of the first message meet a predefined relationship, or a time domain position of the contention resolution message and the time domain position of the second message meet a predefined relationship.

For a possible implementation of the communication apparatus in the ninth aspect, refer to the possible implementations in the third aspect, the fifth aspect, or the seventh aspect.

For technical effects brought by the possible implementations in the ninth aspect, refer to the descriptions of technical effects of the possible implementations in the third aspect, the fifth aspect, or the seventh aspect.

According to a tenth aspect, an embodiment of this application provides another communication apparatus. The communication apparatus includes one or more processors, where the one or more processors are configured to process data and/or information, so that the method in any one of the first aspect to the seventh aspect is implemented.

Optionally, the communication apparatus further includes a memory, where the memory stores a program or instructions. When the program or the instructions are executed by the processor, the communication apparatus is caused to perform the method in any one of the first aspect to the seventh aspect. For example, the communication apparatus may be a chip, the processor is a processing circuit in the chip, and the memory is a random access memory or a cache in the chip.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information into the processor. Further, after the transceiver receives the information, other processing may be performed on the information before the information is input into the processor.

Operations such as sending and/or receiving related to the processor may be generally understood as outputting based on instructions of the processor, unless otherwise specified, or if the operations do not conflict with actual functions or internal logic of the operations in the related descriptions.

In an implementation process, the processor may be a processor specially configured to perform these methods, or may be a processor, for example, a general-purpose processor, configured to execute computer instructions in the memory to perform these methods. For example, the processor may be further configured to execute a program stored in the memory. When the program is executed, the communication apparatus is caused to perform the method according to any one of the first aspect or the possible implementations of the first aspect.

In a possible implementation, the memory is located outside the communication apparatus. In a possible implementation, the memory is located inside the communication apparatus.

In a possible implementation, the processor and the memory may alternatively be integrated into one device. In other words, the processor and the memory may alternatively be integrated together.

In a possible implementation, the communication apparatus further includes the transceiver. The transceiver is configured to receive a signal, send a signal, or the like.

According to an eleventh aspect, this application provides another communication apparatus. The communication apparatus includes a processing circuit and an interface circuit. The interface circuit is configured to obtain a signal or output a signal. The processing circuit is configured to perform the method in any one of the first aspect to the seventh aspect.

According to a twelfth aspect, this application provides a computer-readable storage medium. The computer-readable storage medium stores a computer program, the computer program includes program instructions, and when the program instructions are executed, a computer is caused to perform the method in any one of the first aspect to the seventh aspect.

According to a thirteenth aspect, this application provides a computer program product. The computer program product includes a computer program, the computer program includes program instructions, and when the program instructions are executed, a computer is caused to perform the method in any one of the first aspect to the seventh aspect.

According to a fourteenth aspect, this application provides a chip, including a communication interface and a processor. The communication interface is configured to receive and send a signal of the chip. The processor is configured to execute computer program instructions, so that a communication apparatus including the chip performs the method in any one of the first aspect to the seventh aspect.

According to a fifteenth aspect, an embodiment of this application provides a communication system, including the communication apparatus configured to implement the first aspect or any possible implementation of the first aspect, the communication apparatus configured to implement the second aspect or any possible implementation of the second aspect, and the communication apparatus configured to implement the third aspect or any possible implementation of the third aspect.

According to a sixteenth aspect, an embodiment of this application provides a communication system, including the communication apparatus configured to implement the fourth aspect or any possible implementation of the fourth aspect and the communication apparatus configured to implement the fifth aspect or any possible implementation of the fifth aspect. Optionally, the communication system further includes the communication apparatus configured to implement the first aspect or any possible implementation of the first aspect.

According to a seventeenth aspect, an embodiment of this application provides a communication system, including the communication apparatus configured to implement the sixth aspect or any possible implementation of the sixth aspect and the communication apparatus configured to implement the seventh aspect or any possible implementation of the seventh aspect. Optionally, the communication system further includes the communication apparatus configured to implement the first aspect or any possible implementation of the first aspect.

### BRIEF DESCRIPTION OF DRAWINGS

To describe technical solutions in embodiments of this application or in the background more clearly, the following describes the accompanying drawings used in embodiments of this application or in the background.
FIG. 1 is a diagram of a contention-based random access procedure;
FIG. 2 is a diagram of a non-contention-based random access procedure;
FIG. 3 is a diagram of a multi-node resource multiplexing scenario according to an embodiment of this application;
FIG. 4A is a diagram of an architecture of a communication system to which an embodiment of this application is applicable;
FIG. 4B is a diagram of an architecture of another communication system to which an embodiment of this application is applicable;
FIG. 4C is a diagram of a possible application framework in a communication system;
FIG. 5 is a flowchart of a communication method according to an embodiment of this application;
FIG. 6A is a diagram of time units used for transmission of a Msg 1, a Msg 2, and a Msg 4 according to an embodiment of this application;
FIG. 6B is another diagram of time units used for transmission of a Msg 1, a Msg 2, and a Msg 4 according to an embodiment of this application;
FIG. 7A is an example of a diagram of comparison between a first window determined by a network device #1 and a first window determined by a network device #2 according to an embodiment of this application;
FIG. 7B is an example of a diagram of comparison between a second window determined by a network device #1 and a second window determined by a network device #2 according to an embodiment of this application;
FIG. 8 is a flowchart of another communication method according to an embodiment of this application;
FIG. 9 is a flowchart of another communication method according to an embodiment of this application;
FIG. 10 is a flowchart of another communication method according to an embodiment of this application;
FIG. 11 is an example of a time domain position of a first window and a time domain position of a Msg 1 according to an embodiment of this application;
FIG. 12 is another example of a time domain position of a first window and a time domain position of a Msg 1 according to an embodiment of this application;
FIG. 13 is a diagram of a structure of a communication apparatus 1300 according to an embodiment of this application; and
FIG. 14 is a diagram of a structure of another apparatus 140 according to an embodiment of this application.

### DESCRIPTION OF EMBODIMENTS

In this specification, claims, and the accompanying drawings of this application, terms such as "first" and "second" are only intended to distinguish between different objects but do not describe a particular order. It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to this embodiment may be included in at least one embodiment of this application. The phrase appearing in various places in this specification may not necessarily refer to a same embodiment, and is not an independent or optional embodiment exclusive from another embodiment. It may be understood explicitly and implicitly by a person skilled in the art that embodiments described herein may be combined with other embodiments.

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" usually indicates an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) only based on (or according to) A, and B may alternatively be determined (or generated) based on (or according to) A and/or other information.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. The information may undergo necessary processing, for example, a format change, between the source end for sending the information and the destination end. However, the destination end may understand valid information from the source end. Similar descriptions in this application may be understood similarly, and details are not described herein.

For ease of understanding solutions of this application, the following first describes terms and technical solutions in embodiments of this application.

### Random access

Random access is a process in which a user equipment (user equipment, UE) establishes a connection to and achieves uplink synchronization with a cell (or a network), and is also a necessary process in which the UE establishes a radio link to the cell (for example, a 4G network or a 5G network). After the random access is completed, data interworking may be performed between a base station and the UE. The UE may implement, through the random access, the following three basic functions.
(1) Achieving uplink synchronization with a network device (for example, a gNB) through timing advance (timing advance, TA). Once uplink out-of-synchronization occurs, that is, the UE does not achieve uplink synchronization with the network device, the UE can perform transmission of a signal only on a physical random access channel (physical random access channel, PRACH). Downlink synchronization between the UE and the network device is implemented through a special synchronization channel. Specifically, the network device broadcasts a downlink synchronization signal to each UE through the special synchronization channel, and the network device continuously broadcasts the downlink synchronization signal at a specific interval. If the UE uses this broadcast-based synchronization mechanism in an uplink, it actually wastes energy and causes significant interference to another UE.
(2) Obtaining a grant for an uplink resource (UL_GRANT), where the uplink resource includes an uplink resource used by the UE to send a Msg 3. The Msg 3 is a message sent by the UE in a third step in a contention-based random access procedure.
(3) Being allocated a unique identifier, namely, a cell radio network temporary identifier (cell radio network temporary identifier, C-RNTI), to the UE. A purpose of the random access is to establish an uplink synchronization relationship between the UE and the cell and request the cell to allocate a dedicated resource to the UE for normal service transmission.

The following are some application scenario cases of the random access.

Scenario case (Case) 1: initial radio resource control (radio resource control, RRC) connection establishment. When a UE transitions from an RRC idle state (RRC-IDLE) to an RRC connected state (RRC-CONNECTED), the UE initiates random access, for example, initial access.

Scenario case 2: RRC connection reestablishment. After a radio link failure (radio link failure, RLF) occurs between a UE and a cell, the UE needs to re-establish an RRC connection to the cell. In this case, the UE initiates random access.

Scenario case 3: cell handover. When a UE performs a cell handover, the UE initiates random access in a target cell (a cell to which the UE is to be handed over).

Scenario case 4: Downlink data arrives. When a UE is in a connected state, and a network device (for example, an eNodeB) needs to transmit downlink data to the UE but finds that the UE is in an uplink out-of-synchronization state, the network device controls the UE to initiate random access, so as to perform uplink transmission of a corresponding acknowledgment character (acknowledgment character, ACK)/negative acknowledgment (negative acknowledgment, NACK) character.

Scenario case 5: Uplink data arrives. When a UE is in a connected state, and the UE needs to transmit uplink data to a network device but finds that the UE is in an uplink out-of-synchronization state or has no available physical uplink control channel (physical uplink control channel, PUCCH) resource for transmission of a scheduling request (scheduling request, SR) (in this case, a UE that is already in an uplink synchronization state is allowed to use a random access channel (random access channel, RACH) as a substitute for the SR), the UE initiates random access.

There are two modes of random access procedures: a contention-based random access procedure (contention-based random access procedure) (which inherently carries a risk of collision) and a non-contention-based random access procedure (non-contention-based random access procedure).

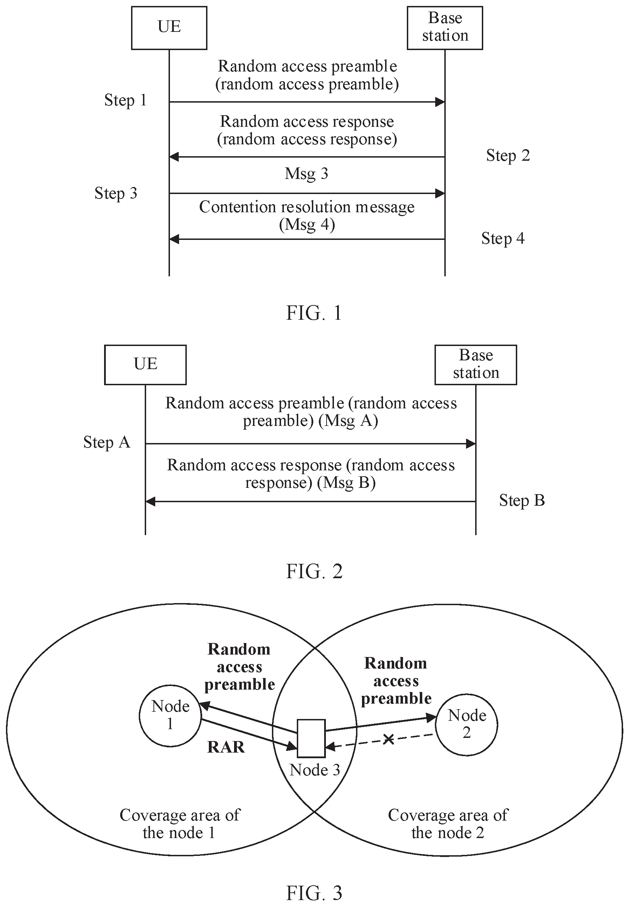

FIG. 1 is a diagram of a contention-based random access procedure. The contention-based random access procedure shown in FIG. 1 may be referred to as a four-step random access procedure. As shown in FIG. 1, the contention-based random access procedure includes the following four steps.

Step 1 (or first step): A UE sends a random access preamble (random access preamble) on a physical random access channel (physical random access channel, PRACH), and a base station detects the random access preamble to obtain a random access preamble identifier (random access preamble identifier, RAPID) and a downlink transmission beam (Tx Beam), and estimate a transmission delay. The random access preamble may be referred to as a Msg 1. A principle of detecting the random access preamble by the base station is calculating a correlation peak value of the random access preamble in a detection interval using a logical root sequence of a local cell. The base station sends the random access preamble identifier (preamble ID) to the UE through an RAR. If the preamble ID in the RAR received by the UE is the same as the preamble ID sent by the UE, the UE considers that a Msg 2 is successfully received. If the preamble ID in the RAR received by the UE is different from the preamble ID sent by the UE, the UE considers that a Msg 2 fails to be received and re-initiates random access on a next PRACH after an RAR detection window.

Step 2 (or second step): The base station sends a random access response (random access response, RAR) (also referred to as a Msg 2) on a physical downlink shared channel (physical downlink shared channel, PDSCH). The RAR carries TA corresponding to the transmission delay estimated in the first step, the RAPID, a temporary cell radio network temporary identifier (temporary cell radio network temporary identifier, TC-RNTI), and an uplink grant (UL Grant) used for transmission of a Msg 3 in a third step. UL is short for uplink (uplink). The UE adjusts uplink timing using the TA. The Msg 2 is sent on the downlink transmission beam determined in the first step.

Step 3 (or third step): The UE performs scheduled transmission of a Msg 3 based on the uplink grant in the RAR, where the Msg 3 carries identifier information of the UE.

Step 4 (or fourth step): The base station sends, on the PDSCH, a contention resolution message (also referred to as a Msg 4) to the UE. In the fourth step, contention and a collision that are caused when a plurality of UEs attempt to use a same random access resource and a same random access preamble for access are resolved, and the Msg 4 is sent on the downlink transmission beam determined in the first step.

FIG. 2 is a diagram of a non-contention-based random access procedure. The non-contention-based random access procedure shown in FIG. 2 may be referred to as a two-step random access procedure. As shown in FIG. 2, the non-contention-based random access procedure includes the following two steps.

Step A: A UE sends a random access preamble (random access preamble) (also referred to as a Msg A) to a first network device.

In step A, the random access preamble and content ("PUSCH payload") sent through a physical uplink shared channel (physical uplink shared channel, PUSCH) are generally referred to as the Msg A. The "PUSCH payload" is generally considered as content carried by the PUSCH, which is similar to the Msg 3 in the four-step random access procedure, that is, "scheduled transmission". The Msg A herein, namely, the "PUSCH payload" may carry RRC messages such as RRCSetupRequest, RRCResumeRequest and RRCResumeRequest1.

Step B: After successfully receiving the random access preamble, the first network device returns a random access response (random access response) message (also referred to as a Msg B) to the UE.

In step B, the random access response message is generally referred to as the Msg B, and generally carries content of the RAR in the second step and content of the contention resolution (contention resolution) message in the fourth step in the four-step random access procedure.

Non-contention-based random access uses a dedicated random access resource and random access preamble. Therefore, no contention or collision exists, and the third step and the fourth step are not needed.

In a multi-node networking scenario, a resource (including a frequency resource) is usually multiplexed between nodes to improve system spectral efficiency. In the following, a multi-node resource multiplexing scenario means a networking scenario in which resource multiplexing is performed (or a resource is multiplexed) between multiple nodes. FIG. 3 is a diagram of a multi-node resource multiplexing scenario according to an embodiment of this application. As shown in FIG. 3, a node 1 and a node 2 multiplex a resource, that is, a same resource is used for downlink transmission performed by the node 1 and downlink transmission performed by the node 2. After a node 3 in a coverage overlapping area of the node 1 and the node 2 initiates random access to the node 1, a Msg 2/Msg 4 sent by the node 1 to the node 3 is subject to interference caused by the downlink transmission performed by the node 2. The interference causes the node 3 to fail to decode the Msg 2/Msg 4, resulting in a random access failure. For example, when the node 3 needs to join an ad hoc network associated with the node 1, the node 3 initiates random access to the node 1. For example, after an RLF occurs, the node 3 initiates random access to the node 1. For example, when performing a handover from a cell corresponding to the node 2 to a cell corresponding to the node 1, the node 3 initiates random access to the node 1. A trigger condition for initiating random access by the node 3 to the node 1 is not limited in this application.

The node in this application may be a network device (for example, a gNB), or may be a terminal device, or may be a node having some or all functions of a network device, or may be a node (for example, an IAB node) having a wireless backhaul function and/or a wireless access function. Refer to FIG. 3. An example of the multi-node resource multiplexing scenario is as follows: The node 1, the node 2, and the node 3 each include a gNB and a customer premises equipment (customer premises equipment, CPE). The customer premises equipment may also be referred to as a customer-end equipment. The CPE is hardware that is physically located on a user side, for example, a server, a workstation, a modem, a hub, a bridge, a switch, a router, or a mobile termination (mobile termination, MT) in the IAB node. In this application, the gNB is used as an example of the network device. When the node 3 includes the gNB and the CPE, that the node 3 initiates random access to the node 1 may be that the CPE included in the node 3 initiates random access to the node 1. Refer to FIG. 3. Another example of the multi-node resource multiplexing scenario is as follows: Both the node 1 and the node 2 include a gNB and CPE, and the node 3 is a terminal device. Refer to FIG. 3. Another example of the multi-node resource multiplexing scenario is as follows: Both the node 1 and the node 2 are gNBs, and the node 3 is a terminal device. Refer to FIG. 3. Another example of the multi-node resource multiplexing scenario is as follows: One of the node 1 and the node 2 is a gNB, the other of the node 1 and the node 2 includes a gNB and CPE, and the node 3 is a terminal device.

In the multi-node resource multiplexing scenario, when a terminal device initiates a random access procedure in a coverage overlapping area of multiple nodes (for example, base stations), downlink interference occurs due to resource multiplexing between the nodes. The downlink interference causes the terminal device to fail to decode a Msg 2 or a Msg 4, resulting in a random access failure. Refer to FIG. 3. The Msg 2/Msg 4 sent by the node 1 to the node 3 is subject to interference caused by the downlink transmission performed by the node 2. The interference causes the node 3 to fail to decode the Msg 2/Msg 4, resulting in a random access failure. In the multi-node resource multiplexing scenario, because a Msg 2/Msg 4 sent by a network device to a terminal device is subject to interference caused by downlink transmission performed by another network device, an existing technical solution has a problem of a low random access success rate. Therefore, a technical solution applicable to a multi-node resource multiplexing scenario needs to be studied, so as to improve a random access success rate. This application provides a technical solution applicable to a multi-node resource multiplexing scenario, which can improve a random access success rate.

The technical solution provided in this application aims to reduce or avoid interference caused by downlink transmission performed by another network device to a Msg 2/Msg 4 sent by a network device to a terminal device in the multi-node resource multiplexing scenario. For example, refer to FIG. 3. The interference caused by the downlink transmission performed by the node 2 to the Msg 2/Msg 4 sent by the node 1 to the node 3 is reduced or avoided. An example of the technical solution provided in this application is as follows: In a process in which the node 1 sends an RAR message (a Msg 2) to the node 3, the node 2 does not perform downlink transmission (or downlink scheduling) or does not perform downlink transmission in a beam direction corresponding to the RAR message. The beam direction corresponding to the RAR message may be a beam direction of a random access preamble (a Msg 1) associated with the RAR message, namely, a beam direction of a random access preamble sent by a terminal device. In other words, an example of the technical solution provided in this application is as follows: Refer to FIG. 3. The node 1 sends an RAR message to the node 3, and a resource for the node 2 to perform downlink transmission does not include a downlink resource in a time window (for example, a first window below) in which the node 1 sends the RAR message or a downlink resource in a time window in which the node 1 sends the RAR message and in a beam direction corresponding to the RAR message.

Based on the foregoing idea, a possible implementation of the technical solution provided in this application is as follows: A relationship between a time domain position of a Msg 1 and a time domain position of a first window is predefined, in other words, a time domain position of a Msg 1 and a time domain position of a first window meet a predefined relationship, where the first window includes a time unit used by a cell to which the Msg 1 belongs to send a Msg 2 and/or a Msg 4 associated with the Msg 1; a network device (for example, the node 2 in FIG. 3) that receives the Msg 1 obtains the time domain position of the first window based on the time domain position of the Msg 1; and a resource for the network device to perform downlink transmission does not include a downlink resource in the first window or a downlink resource in the first window and in a beam direction of the Msg 1. The first window may be considered as a time window in which the cell to which the Msg 1 belongs sends the Msg 2 and/or the Msg 4. Because the resource for the network device that receives the Msg 1 to perform the downlink transmission does not include the downlink resource in the first window or the downlink resource in the first window and in the beam direction of the Msg 1, the downlink transmission performed by the network device does not cause interference to transmission of the Msg 2 and/or the Msg 4 associated with the Msg 1. In the possible implementation, the network device obtains the time domain position of the first window based on the time domain position of the received Msg 1, and does not need to interact with a network device corresponding to the cell to which the Msg 1 belongs. In other words, in the technical solution provided in this application, network devices do not need to exchange information to reduce or avoid interference to the Msg 2/Msg 4, thereby reducing signaling overheads. The technical solution provided in this application is applicable to a multi-node resource multiplexing scenario in which network devices cannot directly exchange information. In addition, the technical solution provided in this application is also applicable to a multi-node resource multiplexing scenario in which network devices can directly exchange information, thereby reducing signaling overheads.

The following describes a communication system to which the technical solution provided in this application is applicable.

The technical solution provided in this application may be applied to various communication systems that support a random access procedure, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) or new radio (new radio, NR) system, a wireless local area network (wireless local area network, WLAN) system, a satellite communication system, a future communication system like a 6th generation (6th generation, 6G) mobile communication system, or a system integrating a plurality of systems.

The technical solution provided in embodiments of this application is also applicable to another communication system that supports a random access procedure. The foregoing communication systems to which the technical solution provided in embodiments of this application is applicable are merely examples for description. A communication system to which the technical solution provided in this application is applicable is not limited thereto. This is uniformly described herein, and details are not described below again.

A first device in the communication system may send a signal to a second device or receive a signal from a third device. The signal may include information, signaling, data, or the like. The device may alternatively be replaced with an entity, a network entity, a communication device, a communication module, a node, a communication node, or the like. In the present disclosure, a network element is used as an example for description. The first device may be a network device or a terminal device, the second device may be a network device or a terminal device, and the third device may be a network device or a terminal device. For example, the communication system may include at least one terminal device and at least one network device. The network device may send a downlink signal to the terminal device, and/or the terminal device may send an uplink signal to the network device. It may be understood that the terminal device in the present disclosure may be replaced with the first device, the network device may be replaced with the second device, and the terminal device and the network device perform a corresponding communication method in the present disclosure.

The technical solution provided in this application may be applied to any one of the following scenarios: relay (relay), a wireless mesh (mesh) network, integrated access and backhaul (integrated access and backhaul, IAB), mobile IAB, an ad hoc network, or a mobile base station. In the foregoing scenario, a network node includes a node that has all or some functions of a base station or a node that has a wireless backhaul function and a wireless access function. In the scenarios such as the mobile base station and the mobile IAB, a cell is not fixed or stationary, there is no wired connection, wireless interface, or backhaul interface between base stations, and the base stations cannot directly exchange information. In this case, the base stations cannot avoid, through inter-cell coordination, interference to a random access procedure initiated by a terminal device in a coverage overlapping area. The technical solution provided in this application does not require direct information exchange between base stations. Therefore, the technical solution is applicable to the scenarios such as the mobile base station and the mobile IAB. In a communication scenario in which there is a wired connection or a wireless interface between at least two base stations, interference coordination may still be achieved without mutual information transmission between the base stations, thereby reducing overheads of information exchange between the base stations. The technical solution provided in this application is applied to the communication scenario in which there is a wired connection or a wireless interface between at least two base stations, to reduce signaling overheads.

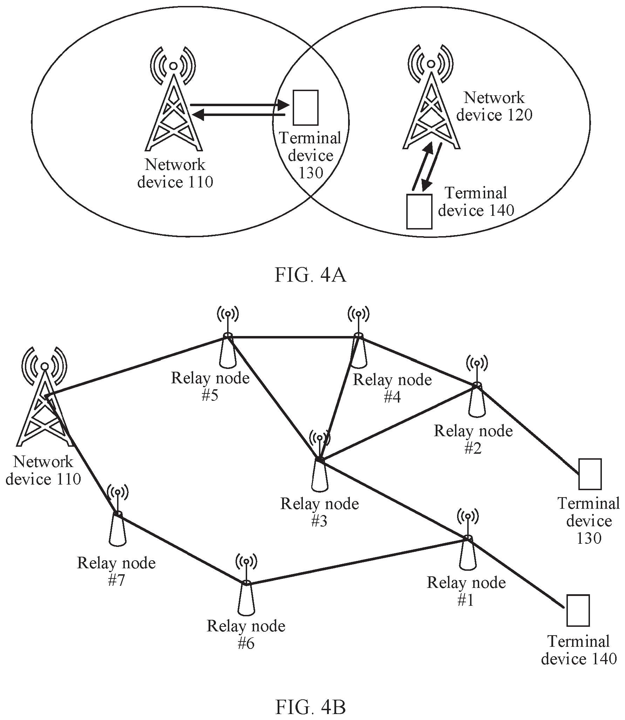

FIG. 4A is a diagram of an architecture of a communication system to which an embodiment of this application is applicable. As shown in FIG. 4A, the communication system includes a network device 110, a network device 120, a terminal device 130, and a terminal device 140. The communication system to which embodiments of this application are applicable includes one or more terminal devices. The terminal device 130 and the terminal device 140 are used as examples of the terminal devices in the communication system. FIG. 4A is merely a diagram. A quantity of network devices and a quantity of terminal devices included in the communication system are not limited in embodiments of this application. The terminal device 130 may access the network device 110, and communicate with the network device 110. The terminal device 140 may access the network device 120, and communicate with the network device 120. For example, the terminal device 130 is located in a coverage overlapping area of the network device 110 and the network device 120.

FIG. 4B is a diagram of an architecture of another communication system to which an embodiment of this application is applicable. As shown in FIG. 4B, the communication system includes a network device 110, a terminal device 130, a terminal device 140, and a plurality of relay nodes (FIG. 4B shows only a relay node #1 to a relay node #7). The communication system to which embodiments of this application are applicable includes one or more terminal devices. The terminal device 130 and the terminal device 140 are used as examples of the terminal devices in the communication system. FIG. 4B is merely a diagram. A quantity of network devices, a quantity of terminal devices, and a quantity of relay nodes included in the communication system are not limited in embodiments of this application. The terminal device 130 and the terminal device 140 may access the network device 110 through the relay node, and communicate with the network device 110. For example, the relay node is an IAB node or an AP, and the terminal device 130 may be located in a coverage overlapping area of the relay node #1 and the relay node #2.

In embodiments of this application, a terminal device (terminal equipment) may also be referred to as a user equipment (user equipment, UE), an access terminal, a subscriber unit (subscriber unit), a subscriber station, a mobile console, a mobile station (mobile station, MS), a remote station, a remote terminal, a mobile device, a user terminal, a terminal (terminal), a wireless communication device, a user agent, or a user apparatus.

The terminal device may be a device that provides a wireless communication function, for example, a handheld device or a vehicle-mounted device that has a wireless connection function. Currently, some examples of the terminal device are a mobile phone (mobile phone), a cellular phone (cellular phone), a smartphone (smartphone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a terminal device in a 5G network, a terminal device in a future evolved public land mobile network (public land mobile network, PLMN), and the like. This is not limited in embodiments of this application.

By way of example but not limitation, in embodiments of this application, the terminal device may alternatively be a mobile termination (mobile termination, MT) in an IAB node. Refer to FIG. 4B. The relay node may be an IAB node. When facing a parent node of the IAB node, the IAB node may be considered as a terminal device. In this case, the IAB node plays a role of an MT.

By way of example but not limitation, in embodiments of this application, the terminal device may alternatively be a wearable device. The wearable device may also be referred to as an intelligent wearable device, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. In a broad sense, intelligent wearable devices include full-featured and large-sized devices that can implement all or some functions without relying on smartphones, for example, smart watches or smart glasses, and devices that focus only on a specific type of application function and need to be used together with other devices such as smartphones, for example, various smart bands or smart jewelry for monitoring physical signs.

In embodiments of this application, an apparatus configured to implement a function of the terminal device may be a terminal device, or may be an apparatus that can support the terminal device in implementing the function, for example, a chip system. The apparatus may be installed in the terminal device or used in conjunction with the terminal device. In embodiments of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that enables the terminal device to access a wireless network. The base station may cover or be replaced with the following names in a broad sense, for example, a RAN node, a NodeB (NodeB), an evolved NodeB (evolved NodeB, eNB), a next generation NodeB (next generation NodeB, gNB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a relay station, a transmitting and receiving point (transmitting and receiving point, TRP), an IAB node, a transmitting point (transmitting point, TP), a master base station, a secondary base station, a multi-standard radio (multi-standard radio, MSR) node, a network controller, an access node, a wireless node, an access point (access point, AP), a transmission node, a transceiver node, a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, and one or a group of antenna panels (including a plurality of antenna panels) of a base station in a 5G system.

The IAB node integrates a mobile termination (mobile termination, MT) and a distributed unit (distributed unit, DU). The IAB node may include three parts: an MT, a DU, and a central unit (central unit, CU). The central unit may be referred to as a central unit. The IAB node may include one CU and one or more DUs. When the IAB node includes a CU, the IAB node is an IAB donor (IAB donor) node, and the CU in the IAB donor node accesses a core network through a next generation application protocol (next generation application protocol, NG) interface. When facing a parent node of the IAB node, the IAB node may be considered as a terminal. In this case, the IAB node plays a role of an MT. When facing a child node (the child node may be a terminal or an MT of another IAB node) of the IAB node, the IAB node may be considered as a network device. An IAB node may establish a backhaul connection to at least one parent node of the IAB node by using an MT part. A DU part of an IAB node may provide an access service for a terminal or an MT part of another IAB node.

The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that functions as a base station in device-to-device (device-to-device, D2D), vehicle-to-everything (vehicle-to-everything, V2X), or machine-to-machine (machine-to-machine, M2M) communication, a network side device in a 6G network, a device that functions as a base station in a future communication system, or the like. The base station may support networks using a same access technology or different access technologies. Optionally, the RAN node may alternatively be a server, a wearable device, a vehicle, a vehicle-mounted device, or the like. For example, an access network device in a V2X technology may be a roadside unit (roadside unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU, a DU, or both a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device, for example, included in an RRU, an AAU, or an RRH.

The RAN node may support one or more categories of fronthaul interfaces, and different fronthaul interfaces correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or two of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different split modes between the DU and the RU correspond to different categories (categories, Cat) of eCPRIs, for example, eCPRI Cat A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions after the demapping (for example, one or two of digital BF or fast Fourier transform (fast Fourier transform, FFT)/CP removal) are moved to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be installed in the network device or used in conjunction with the network device. In embodiments of this application, an example in which the apparatus configured to implement the function of the network device is a network device is merely used for description, and constitutes no limitation on the solutions in embodiments of this application.

The network device and/or the terminal device may be deployed on land, including an indoor device, an outdoor device, a handheld device, or a vehicle-mounted device, may be deployed on water, or may be deployed on an airplane, a balloon, and a satellite in the air. A scenario in which the network device and the terminal device are located is not limited in embodiments of this application. In addition, the terminal device and the network device may be hardware devices, may be software functions running on dedicated hardware or software functions running on general-purpose hardware, for example, virtualized functions instantiated on a platform (for example, a cloud platform), or may be entities including a dedicated or general-purpose hardware device and a software function. Specific forms of the terminal device and the network device are not limited in this application.

It should be noted that a network architecture described in embodiments of this application is intended to describe the technical solution in embodiments of this application more clearly, and does not constitute a limitation on the technical solution provided in embodiments of this application. A person of ordinary skill in the art may learn that the technical solution provided in embodiments of this application is also applicable to a similar technical problem as a network architecture evolves and a new service scenario emerges. In the following embodiments, the technical solution provided in embodiments of this application is described by using an example in which the apparatus configured to implement the function of the network device is a network device, and the network device is a base station.

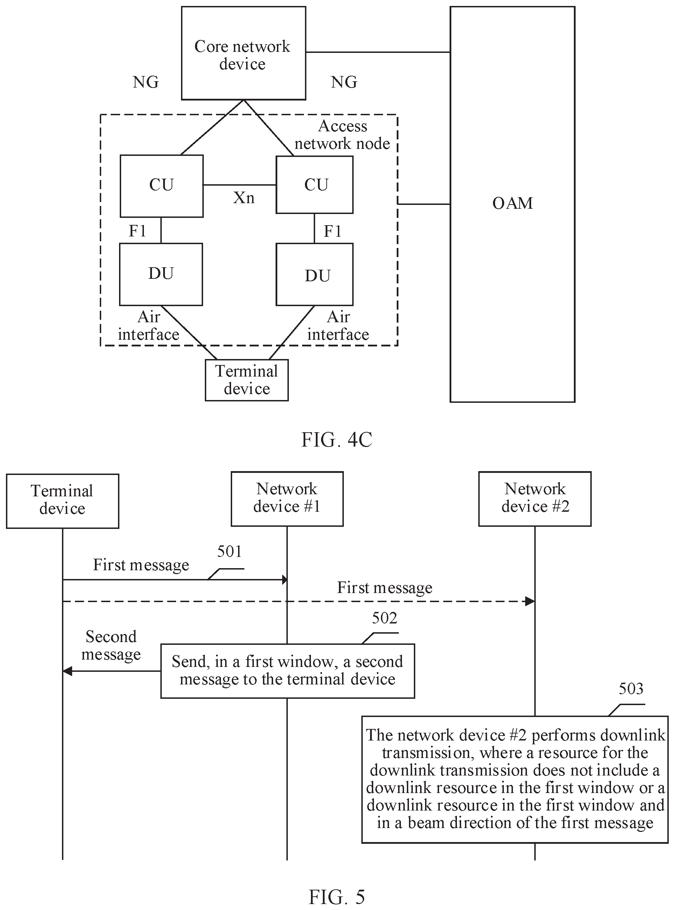

FIG. 4C is a diagram of a possible application framework in a communication system. As shown in FIG. 4C, the communication system includes a core network device, an access network node, an operation, administration and maintenance (operation, administration and maintenance, OAM) network element, and a terminal device. Network elements in the communication system are connected through an interface (for example, NG or Xn) or an air interface. The access network node may serve as an independent RAN node, or may include a plurality of RAN nodes, for example, include a CU and a DU. One or more AI modules may be further disposed in the CU and/or the DU. Optionally, the CU may be further split into a CU-CP and a CU-UP. One or more AI models are disposed in the CU-CP and/or the CU-UP.

It may be understood that a specific structure of an execution body of the method provided in embodiments of this application is not specifically limited in this application, provided that communication can be performed according to the method provided in embodiments of this application by running a program that records code of the method provided in embodiments of this application. The method provided in embodiments of this application may be applied to communication between a terminal device and a network device. The following uses interaction between a terminal device and a network device (for example, a base station) as an example for description.

FIG. 5 is a flowchart of a communication method according to an embodiment of this application. As shown in FIG. 5, the method includes the following steps.

501: A terminal device sends a first message to a network device #1.

Correspondingly, the network device #1 receives the first message from the terminal device, and a network device #2 receives the first message from the terminal device. A dashed arrow in FIG. 5 indicates that the network device #2 receives the first message from the terminal device. For example, the terminal device may be located in a coverage overlapping area of the network device #1 and the network device #2, the network device #1 and the network device #2 multiplex a resource, and a message (for example, a second message below) sent by the network device #1 to the terminal device may be subject to interference caused by downlink transmission performed by the network device #2. The network device #2 may be an example of a network device (excluding the network device #1) that receives the first message. If a plurality of network devices (including the network device #2) receive the first message, operations performed by the plurality of network devices may be similar to an operation performed by the network device #2 after receiving the first message. In FIG. 5, the network device #2 is used as an example to describe an operation performed by the network device (excluding the network device #1) that receives the first message after receiving the first message.

The first message may include a first random access preamble. The first message may be a Msg 1, may be a Msg A, or may be another message with a function similar to that of the Msg 1/Msg A, for example, a message sent by the terminal device in a random access procedure defined in a subsequent communication standard. An entity corresponding to a cell to which the first random access preamble belongs may be the network device #1. In other words, the first random access preamble is included in a preamble sequence associated with a cell managed by the network device #1. The first random access preamble does not belong to a random access preamble that is of a first cell and that is supported by the network device #2. In other words, the first random access preamble is not included in a preamble sequence associated with a cell managed by the network device #2.

502: The network device #1 sends, in a first window, a second message to the terminal device.

The second message may be a random access response message (namely, a Msg 2), a contention resolution message (namely, a Msg 4), a Msg B, or a message with a function similar to that of the Msg 2. The second message and the first message belong to a same random access procedure. The first window includes k time units used by the cell to which the first random access preamble belongs to send the second message. The second message and the first message belong to a same random access procedure, and k is an integer greater than 0. Optionally, the first window is used to monitor a PDCCH corresponding to the second message. For example, in the first window, the terminal device monitors the PDCCH corresponding to the second message and receives the second message. A length (or a size) of the first window may be a predefined fixed value, or may be a plurality of predefined optional values. The length of the first window used by the network device #1 may be any one of the plurality of predefined optional values. For example, the network device #1 determines the length of the first window based on channel quality, and the length of the first window determined by the network device #1 when the channel quality is poor (for example, lower than a threshold) is greater than the length of the first window determined when the channel quality is good (for example, higher than a threshold). The network device #1 may alternatively determine the length of the first window in another manner. This is not limited in this application. For example, the first window includes v time units, where v is a predefined integer greater than 0, for example, v is 1. For another example, the first window is an RAR window, and the second message is a Msg 2. For another example, the first window includes a plurality of time units included in an RAR window and s time units used to send a contention resolution message, where the contention resolution message and the first message belong to a same random access procedure, and s is an integer greater than 0. The plurality of time units in the first window may be consecutive in time, or may be non-consecutive in time. For example, the first window includes a first sub-window and a second sub-window, a time unit in the first sub-window is a time unit used by the network device #1 to transmit the second message, a time unit in the second sub-window is a time unit used by the network device #1 to transmit the contention resolution message, and the time unit in the first sub-window and the time unit in the second sub-window are non-consecutive in time. The RAR window is a window in which the terminal device receives an RAR. All or some time-domain resources in the window are actually used by the network device to transmit at least one of the RAR or the PDCCH corresponding to the RAR. A length of the window may be configured by the network device for the terminal device, for example, as 1, 2, 4, 8, 10, 20, 40, or 80 slots. For details, refer to a definition in an existing 3GPP protocol. Details are not described herein.

In a possible implementation, a time domain position of the first window and a time domain position of the first message meet a predefined relationship. For example, the network device #1 may store the predefined relationship or preconfigure the predefined relationship. After receiving the first message, the network device #1 may obtain the time domain position of the first window based on the time domain position of the first message and the predefined relationship. After obtaining the time domain position of the first window, the network device #1 performs step 502.

In a possible implementation, the first window is a random access response window, and the second message is a random access response message.

In a possible implementation, the first window is a time window used by the network device #1 to send the second message, and the first window may include one or more time units. The time domain position of the first window may be a time domain position of the second message. The time domain position of the second message (namely, the time domain position of the first window) and the time domain position of the first message meet a predefined relationship. For example, that the time domain position of the second message and the time domain position of the first message meet the predefined relationship may be that a first time unit used for transmission of the second message (namely, a first time unit used by the network device #1 to transmit the second message) is offset by y time units from a time unit in which the first random access preamble is located or a time unit in which a last symbol of the first random access preamble is located, where y is a predefined integer greater than 0. Step 502 may be replaced with the following: The network device #1 sends a second message to the terminal device. The second message is a random access response message or a contention resolution message.

503: The network device #2 performs downlink transmission, where a resource for the downlink transmission does not include a downlink resource in the first window or a downlink resource in the first window and in a beam direction of the first message.

The first window includes k time units used by the cell to which the first random access preamble belongs to send the second message. The second message and the first message belong to a same random access procedure. k is an integer greater than 0. For example, k is 1, 2, 3, 4, 5, 6, 8, or the like. In this application, the time unit may be one or more subframes, one or more slots, one or more mini-slots, or another time length. This is not limited in this application. Step 503 may be replaced with the following: The network device #2 does not perform downlink transmission in the first window or does not perform downlink transmission in the first window and in a beam direction of the first message, where the first window includes k time units used by the cell to which the first random access preamble belongs to send the second message.

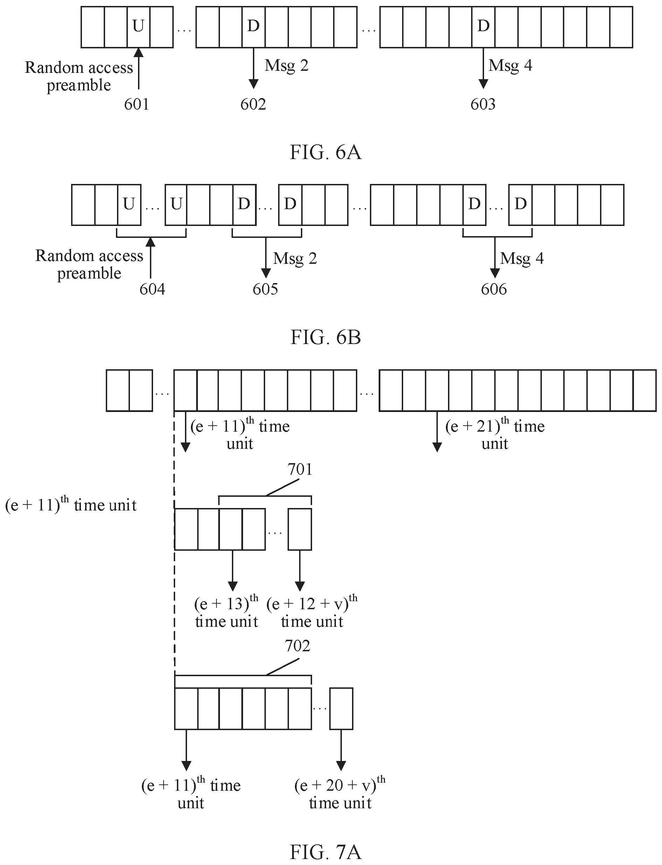

FIG. 6A is a diagram of time units used for transmission of a Msg 1, a Msg 2, and a Msg 4 according to an embodiment of this application. In FIG. 6A, each rectangular box represents one time unit. The terminal device sends the Msg 1 in a time unit (referred to as a time unit #1 below) indicated by an arrow 601, the network device #1 sends the Msg 2 in a time unit (referred to as a time unit #2 below) indicated by an arrow 602, and the network device #1 sends the Msg 4 in a time unit (referred to as a time unit #3 below) indicated by an arrow 603. For example, the first window includes the time unit #2 and/or the time unit #3. Refer to FIG. 6A. An example of step 503 is as follows: The network device #2 performs downlink transmission, where a resource for the downlink transmission does not include a downlink resource in the time unit #2 (namely, the first window) or a downlink resource in the time unit #2 and in a beam direction of the first message. Refer to FIG. 6A. Another example of step 503 is as follows: The network device #2 performs downlink transmission, where a resource for the downlink transmission does not include a downlink resource in the time unit #3 (namely, the first window) or a downlink resource in the time unit #3 and in a beam direction of the first message. Refer to FIG. 6A. Another example of step 503 is as follows: The network device #2 performs downlink transmission, where a resource for the downlink transmission does not include a downlink resource in the time unit #2 or a downlink resource in the time unit #2 and in a beam direction of the first message, and a downlink resource in the time unit #3 or a downlink resource in the time unit #3 and in the beam direction of the first message. FIG. 6A is merely an example. An offset between the time unit #1 and the time unit #2 and an offset between the time unit #2 and the time unit #3 are not limited in this embodiment of this application. In addition, whether each time unit in FIG. 6A corresponds to uplink or downlink is not limited.

FIG. 6B is another diagram of time units used for transmission of a Msg 1, a Msg 2, and a Msg 4 according to an embodiment of this application. In FIG. 6B, each rectangular box represents one time unit. The terminal device sends the Msg 1 in j1 time units (referred to as a time unit #4 below) indicated by an arrow 604, the network device #1 sends the Msg 2 in j2 time units (referred to as a time unit #5 below) indicated by an arrow 605, and the network device #1 sends the Msg 4 in j3 time units (referred to as a time unit #6 below) indicated by an arrow 606. j1, j2, and j3 are all integers greater than 0, and at least one of j1, j2, and j3 is greater than 1. For example, the first window includes the time unit #5 and/or the time unit #6. Refer to FIG. 6B. Another example of step 503 is as follows: The network device #2 performs downlink transmission, where a resource for the downlink transmission does not include a downlink resource in the time unit #5 (namely, the first window) or a downlink resource in the time unit #5 and in a beam direction of the first message. Refer to FIG. 6B. Another example of step 503 is as follows: The network device #2 performs downlink transmission, where a resource for the downlink transmission does not include a downlink resource in the time unit #5 or a downlink resource in the time unit #5 and in a beam direction of the first message, and a downlink resource in the time unit #6 or a downlink resource in the time unit #6 and in the beam direction of the first message. FIG. 6B is merely an example. An offset between a first time unit in the time unit #4 and a first time unit in the time unit #5 and an offset between the first time unit in the time unit #5 and a first time unit in the time unit #6 are not limited in this embodiment of this application. In addition, whether each time unit in FIG. 6B corresponds to uplink or downlink is not limited.

In a possible implementation, a time domain position of the first window and a time domain position of the first message meet a predefined relationship. For example, the network device #2 may store the predefined relationship or preconfigure the predefined relationship. After receiving the first message, the network device #2 may obtain the time domain position of the first window based on the time domain position of the first message and the predefined relationship. After obtaining the time domain position of the first window, the network device #2 performs step 503. The first window obtained by the network device #2 based on the time domain position of the first message and the predefined relationship may be the same as the first window obtained by the network device #1 based on the time domain position of the first message and the predefined relationship. Alternatively, the first window obtained by the network device #2 based on the time domain position of the first message and the predefined relationship may include the first window obtained by the network device #1 based on the time domain position of the first message and the predefined relationship.

In a possible implementation, after receiving the first message and before performing step 503, the network device #2 performs the following operation: detecting the received first message using a logical root sequence of a cell not managed by the network device #2, to determine that a random access preamble not belonging to a local cell (namely, a cell managed by the network device #2) is received. In other words, the network device #2 detects the received first message using a logical root sequence that is not of a local cell, and determines that a random access preamble not belonging to the local cell (namely, a cell managed by the network device #2) is received. For example, the network device #2 first detects the received first message using a logical root sequence of a local cell, after failing to detect a random access preamble belonging to the local cell, detects the received first message using a logical root sequence of a cell managed by the network device #1, and determines that a random access preamble not belonging to the local cell (namely, a cell managed by the network device #2) is received. The network device #2 may store the logical root sequence of the cell managed by the network device #1. The network device #2 may obtain the logical root sequence of the cell managed by the network device #1 in a manner of interacting with the network device #1, or may obtain the logical root sequence of the cell managed by the network device #1 based on a physical cell identifier (physical cell identifier, PCI) of the cell managed by the network device #1. For example, the logical root sequence supported by the cell managed by the network device #1 is a product of the PCI of the cell managed by the network device #1 and a predefined sequence. Alternatively, the logical root sequence of the cell managed by the network device #1 may be learned in another manner. For example, a cell #2 managed by the network device #2 is adjacent to a cell #1 managed by the network device #1, in other words, the network device #2 is adjacent to the network device #1. The network device #2 may store a logical root sequence of the cell #1, and the network device #1 may store a logical root sequence of the cell #2. In this implementation, that a random access preamble belonging to another cell is received may be learned by detecting a received message (or signal) using a logical root sequence that is not of a local cell, thereby avoiding interference to a random access procedure of the another cell.

In this embodiment of this application, the first window includes the k time units used by the cell to which the first random access preamble belongs to send the second message, and the resource for the network device #2 to perform the downlink transmission does not include the downlink resource in the first window or the downlink resource in the first window and in the beam direction of the first message. This can avoid interference caused by the downlink transmission to transmission of the second message, thereby improving a random access success rate.

The following describes a possible implementation in which the time domain position of the first window and the time domain position of the first message meet a predefined relationship and examples in which the network device #1 or the network device #2 obtains the first window based on the first message and the predefined relationship.

In a possible implementation, the predefined relationship may include a time offset between a first time unit in the first window and a time unit in which the first message (or the first random access preamble) is located or a time unit in which a last symbol of the first message is located. For example, when the terminal device transmits the first message by using one time unit, the predefined relationship includes a time offset between a first time unit in the first window and a time unit in which the first random access preamble is located. When the terminal device transmits the first message by using a plurality of time units, the predefined relationship includes a time offset between a first time unit in the first window and a time unit in which a last symbol of the first random access preamble is located.

Example 1: The second message is a random access response message or a contention resolution message, and the predefined relationship is that the first time unit in the first window is offset by f time units from the time unit in which the first random access preamble is located or the time unit in which the last symbol of the first random access preamble is located, where f is a predefined integer greater than 0. The first window may be a time window used by the network device #1 to transmit the second message. That the time domain position of the first window and the time domain position of the first message meet the predefined relationship may be that a time domain position of the second message and the time domain position of the first message meet the predefined relationship. For example, the first time unit used by the network device #1 to transmit the second message is offset by f time units from the time unit in which the first random access preamble is located or the time unit in which the last symbol of the first random access preamble is located. In the example, f is a predefined fixed value. For example, f is any one of 5, 6, 8, 9, 10, 12, 15, 20, 30, and the like. That the first time unit in the first window is offset by f time units from the time unit in which the first random access preamble is located may be replaced with that an interval between the first time unit in the first window and the time unit in which the first random access preamble is located is (f - 1) time units. In other words, the predefined relationship is that an interval between the first time unit in the first window and the time unit in which the random access preamble is located is fixed to (f - 1) time units. An example in which the predefined relationship is that the first time unit in the first window is offset by f time units from the time unit in which the first random access preamble is located is as follows: The second message is a Msg 2, and there is an interval of 10 time units between a first time unit (namely, the first time unit in the first window) used for transmission of the Msg 2 and the time unit in which the first random access preamble is located, that is, f is 11. In the example, it is assumed that the time unit in which the first random access preamble is located is an e^{th} time unit. The network device #1 or the network device #2 may determine, based on the first message and the predefined relationship, that the first time unit in the first window is an (e + 11)^{th} time unit, where e is an integer greater than 0. Another example in which the predefined relationship is that the first time unit in the first window is offset by f time units from the time unit in which the first random access preamble is located is as follows: The second message is a Msg 4, and there is an interval of 10 time units between a first time unit (namely, the first time unit in the first window) used for transmission of the Msg 4 and the time unit in which the first random access preamble is located, that is, f is 11.

Example 2: The second message is a random access response message or a contention resolution message, and the predefined relationship is that the first time unit in the first window is offset by f time units from the time unit in which the first random access preamble is located or the time unit in which the last symbol of the first random access preamble is located, where a value range of f is *f*₁ ≤ *f* ≤ f₂, that is, f is greater than or equal to f₁, f is less than or equal to f₂, and f₁ and f₂ are integers greater than 0. Alternatively, the predefined relationship is that the first time unit in the first window is offset by f₁ to f₂ time units from the time unit in which the first random access preamble is located or the time unit in which the last symbol of the first random access preamble is located, that is, a minimum offset is f₁ time units, and a maximum interval is f₂ time units. In other words, the predefined relationship is that an interval between the first time unit in the first window and the time unit in which the first random access preamble is located or the time unit in which the last symbol of the first random access preamble is located is (fi - 1) time units to (f₂ - 1) time units, that is, a minimum interval is (fi - 1) time units, and a maximum interval is (f₂ - 1) time units. For example, f₁ is 5, and f₂ is 10. For another example, f₁ is 10, and f₂ is 20. An example in which the predefined relationship is that the first time unit in the first window is offset by f (*f*₁ ≤ *f* ≤ *f*₂) time units from the time unit in which the first random access preamble is located is as follows: The second message is a Msg 2, and an interval between a first time unit (namely, the first time unit in the first window) used for transmission of the Msg 2 and the time unit in which the first random access preamble is located is not less than 10 time units and not more than 20 time units, that is, f₁ is 11, and f₂ is 21. In the example, it is assumed that the time unit in which the first random access preamble is located is an e^{th} time unit. The network device #1 or the network device #2 may determine, based on the first message and the predefined relationship, that the first time unit in the first window is any one of an (e + 11)^{th} time unit to an (e + 21)^{th} time unit, where e is an integer greater than 0.

A first window determined by the network device #2 may be different from a first window determined by the network device #1. When the network device #1 determines, based on the first message and the predefined relationship, that the first time unit in the first window is any one of a plurality of time units that are consecutive in time, the network device #1 may use any one of the plurality of time units as the first time unit in the first window. When the network device #2 determines, based on the first message and the predefined relationship, that the first time unit in the first window is any one of a plurality of time units that are consecutive in time, the network device #2 may use a first time unit in the plurality of time units as the first time unit in the first window, and determine a last time unit in the first window based on a last time unit in the plurality of time units. For example, the network device #1 or the network device #2 may determine, based on the first message and the predefined relationship, that the first time unit in the first window is any one of an (e + 11)^{th} time unit to an (e + 21)^{th} time unit, and the first window includes v time units. The network device #1 uses an (e + 13)^{th} time unit as the first time unit in the first window, and uses an (e + 12 + v)^{th} time unit as the last time unit in the first window. The network device #2 uses the (e + 11)^{th} time unit as the first time unit in the first window, and uses an (e + 20 + v)^{th} time unit as the last time unit in the first window. FIG. 7A is an example of a diagram of comparison between a first window determined by a network device #1 and a first window determined by a network device #2 according to an embodiment of this application. Refer to FIG. 7A. The first time unit in the first window is any one of an (e + 11)^{th} time unit to an (e + 21)^{th} time unit. 701 represents the first window determined by the network device #1, the first time unit in the first window determined by the network device #1 is an (e + 13)^{th} time unit, and the last time unit is an (e + 12 + v)^{th} time unit. 702 represents the first window determined by the network device #2, the first time unit in the first window determined by the network device #2 is the (e + 11)^{th} time unit, and the last time unit is an (e + 20 + v)^{th} time unit.

Example 3: The second message is a random access response message, and the predefined relationship is that the first time unit in the first window is offset by g time units from the time unit in which the first random access preamble is located or the time unit in which the last symbol of the first random access preamble is located, where g is a predefined integer greater than 0, or a value range of g is *g*₁ ≤ *g* ≤ *g*₂, and g₁ and g₂ are integers greater than 0. In the example, time units in the first window are time units used for transmission of the random access response message, and a last time unit in the first window is a time unit in which the random access response message is located or a time unit in which a last symbol of the random access response message is located. A second window includes o time units used by the cell to which the first random access preamble belongs (namely, the cell managed by the network device #1) to send a contention resolution message, where o is an integer greater than 0. In Example 3, the second window may be a time window used by the network device #1 to transmit the contention resolution message. A time domain position of the second window and the time domain position of the first window meet a predefined relationship. To distinguish the predefined relationship that the time domain position of the second window and the time domain position of the first window meet and the predefined relationship that the time domain position of the first window and the time domain position of the first message meet, the predefined relationship that the time domain position of the second window and the time domain position of the first window meet is named as a predefined relationship #1 below. For example, the predefined relationship #1 includes that a first time unit in the second window is offset by h time units from the last time unit in the first window, where h is a predefined integer greater than 0, or a value range of h is *h*₁ ≤ *h* ≤ *h*₂, and h₁ and h₂ are integers greater than 0. For example, the last time unit in the first window is a d^{th} time unit, and the first time unit in the second window is a (d + h)^{th} time unit, where d is an integer greater than 0. For another example, the last time unit in the first window is a d^{th} time unit, and the first time unit in the second window is any one of a (d + h₁)^{th} time unit to a (d + h₂)^{th} time unit.

A second window determined by the network device #1 may be different from a second window determined by the network device #2. When the network device #1 determines, based on the time domain position of the first window and the predefined relationship #1, that the first time unit in the second window is any one of a plurality of time units that are consecutive in time, the network device #1 may use any one of the plurality of time units as the first time unit in the second window. When the network device #2 determines, based on the time domain position of the first window and the predefined relationship #1, that the first time unit in the second window is any one of a plurality of time units that are consecutive in time, the network device #2 may use a first time unit in the plurality of time units as the first time unit in the second window, and determine a last time unit in the second window based on a last time unit in the plurality of time units. For example, the network device #1 and the network device #2 may determine, based on the first message and the predefined relationship, that the first time unit in the first window is any one of an (e + 11)^{th} time unit to an (e + 21)^{th} time unit, and the first window includes v time units. The network device #1 uses an (e + 13)^{th} time unit as the first time unit in the first window, and uses an (e + 12 + v)^{th} time unit as the last time unit in the first window. The network device #2 uses the (e + 11)^{th} time unit as the first time unit in the first window, and uses an (e + 20 + v)^{th} time unit as the last time unit in the first window. The network device #1 determines, based on the time domain position of the first window determined by the network device #1 and the predefined relationship #1, that the first time unit in the second window is any one of an (e + 12 + v + h₁)^{th} time unit to an (e + 12 + v + h₂)^{th} time unit, and the second window includes v1 time units, where v1 is an integer greater than 0. The network device #1 uses an (e + 13 + v + h₁)^{th} time unit as the first time unit in the second window, and uses an (e + 13 + v + h₁ + v1 - 1)^{th} time unit as the last time unit in the second window. The network device #2 determines, based on the time domain position of the first window determined by the network device #2 and the predefined relationship #1, that the first time unit in the second window is any one of an (e + 10 + v + h₁)^{th} time unit to an (e + 20 + v + h₂)^{th} time unit. The network device #2 uses the (e + 10 + v + h₁)^{th} time unit as the first time unit in the second window, and uses an (e + 20 + v + h₂ + v1 - 1)^{th} time unit as the last time unit in the second window.

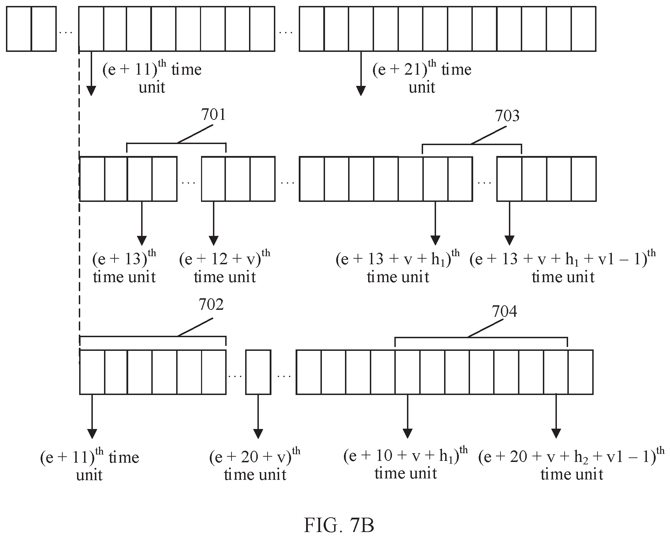

FIG. 7B is an example of a diagram of comparison between a second window determined by a network device #1 and a second window determined by a network device #2 according to an embodiment of this application. Refer to FIG. 7B. The first time unit in the first window is any one of an (e + 11)^{th} time unit to an (e + 21)^{th} time unit. 701 represents the first window determined by the network device #1, the first time unit in the first window determined by the network device #1 is an (e + 13)^{th} time unit, and the last time unit is an (e + 12 + v)^{th} time unit. 702 represents the first window determined by the network device #2, the first time unit in the first window determined by the network device #2 is the (e + 11)^{th} time unit, and the last time unit is an (e + 20 + v)^{th} time unit. 703 represents the second window determined by the network device #1, the first time unit in the second window determined by the network device #1 is an (e + 13 + v + h₁)^{th} time unit, and the last time unit is an (e + 13 + v + h₁ + v1 - 1)^{th} time unit. 704 represents the second window determined by the network device #2, the first time unit in the second window determined by the network device #2 is an (e + 10 + v + h₁)^{th} time unit, and the last time unit is an (e + 20 + v + h₂ + v1 - 1)^{th} time unit.

Example 4: The second message is a random access response message, the first window further includes s time units used by the cell to which the first random access preamble belongs to send a contention resolution message, the contention resolution message and the first message belong to a same random access procedure, where s is an integer greater than 0. The predefined relationship is that a start position of the first window (namely, the first time unit in the first window) is offset by t time units from the time unit in which the first random access preamble is located or the time unit in which the last symbol of the first random access preamble is located, where t is a predefined integer greater than 0, or a value range of t is *t*₁ ≤ *t* ≤ *t*₂, and t₁ and t₂ are integers greater than 0, or a start position of the first window is a first downlink time unit after the cell to which the first random access preamble belongs sends the first message. The start position of the first window may alternatively be another downlink time unit after the cell to which the first random access preamble belongs sends the first message. This is not limited in this application. In the example, the network device #1 transmits, in the first window, a Msg 2 and a Msg 4. In other words, transmission of the Msg 2 and the Msg 4 is completed in the first window. To avoid interference caused by the network device #2 (corresponding to an interference cell for the terminal device) to a random access procedure of the terminal device, the network device #2 may determine, based on the first message and the predefined relationship, that the network device #1 (corresponding to a target serving cell for the terminal device) sends the Msg 2 and the Msg 4 in the first window. After detecting a random access preamble sent by the terminal device and learning that the random access preamble is a random access preamble that is not of a local cell, the network device #2 does not perform downlink transmission in the first window or does not perform downlink transmission in the first window and in the beam direction of the first message. This can avoid the interference caused by the network device #2 (corresponding to the interference cell for the terminal device) to the random access procedure of the terminal device.

The network device #1 and the network device #2 may determine the start position of the first window based on the first message and the predefined relationship. A length of the first window may be a predefined fixed value, or may be a plurality of predefined optional values. When the length of the first window is a predefined fixed value, first windows determined by the network device #1 and the network device #2 based on the first message and the predefined relationship may be the same. When the length of the first window is a plurality of predefined optional values, first windows determined by the network device #1 and the network device #2 based on the first message and the predefined relationship may be the different. The first window determined by the network device #2 based on the first message and the predefined relationship may include the first window determined by the network device #1 based on the first message and the predefined relationship. For example, the network device #1 determines, based on the first message and the predefined relationship, that the first time unit in the first window is an i^{th} time unit, the length of the first window is a plurality of predefined optional values, and the plurality of optional values include an optional value #1, an optional value #2, ..., and an optional value #z, where i is an integer greater than 0. When the network device #1 uses the optional value #2 as the length of the first window, the last time unit in the first window is an (i - 1 + optional value #2)^{th} time unit. The network device #2 determines, based on the first message and the predefined relationship, that the first time unit in the first window is an i^{th} time unit, and the network device #2 determines that the last time unit in the first window is an (i - 1 + optional value #z)^{th} time unit, where the optional value #z is a maximum one of the plurality of optional values. In other words, when the length of the first window is a plurality of optional values, the first window in which the network device #2 does not perform downlink transmission is the first window with a greatest length. In this way, when the network device #1 (supporting the target serving cell for the terminal device) sends the Msg 2 and the Msg 4 to the terminal device, the network device #2 does not cause interference to receiving the Msg 2 and the Msg 4 by the terminal device.

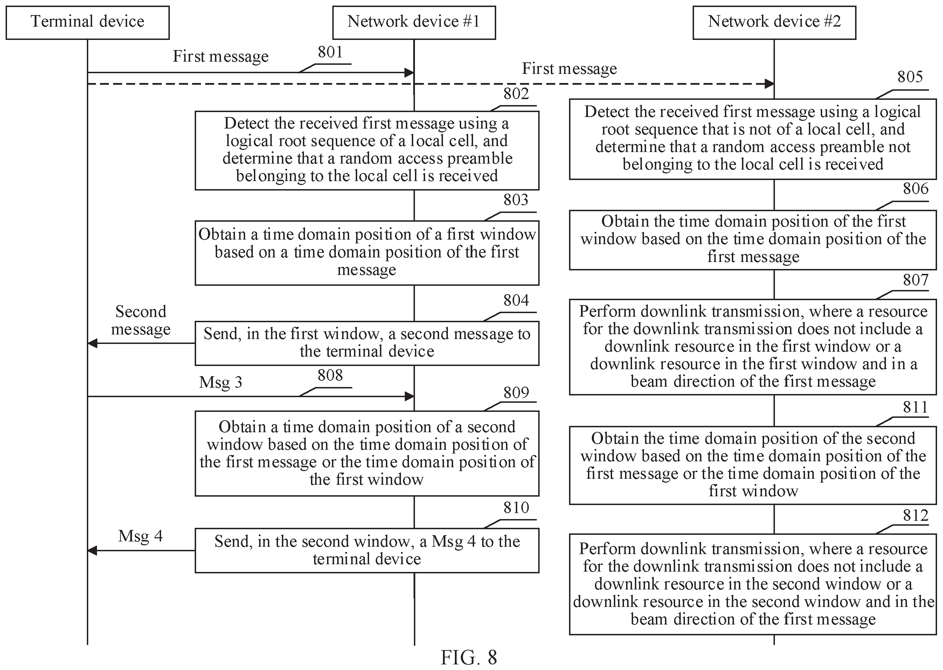

FIG. 8 is a flowchart of another communication method according to an embodiment of this application. The method procedure in FIG. 8 is a possible implementation of the method described in FIG. 5. As shown in FIG. 8, the method includes the following steps.

801: A terminal device sends a first message to a network device #1.

Correspondingly, the network device #1 receives the first message from the terminal device, and a network device #2 receives the first message from the terminal device. A dashed arrow in FIG. 8 indicates that the network device #2 receives the first message from the terminal device. For step 801, refer to step 501. The first message may include a first random access preamble. For example, the first message is a Msg 1.

802: The network device #1 detects the received first message using a logical root sequence of a local cell, and determines that a random access preamble belonging to the local cell is received.

That the network device #1 detects the received first message using a logical root sequence of a local cell may be replaced with that the network device #1 detects the received first message using a logical root sequence of a cell managed by the network device #1. The local cell in step 802 is a cell managed by the network device #1. Step 802 may be replaced with the following: The network device #1 detects, using a logical root sequence of a local cell, a random access preamble belonging to the local cell.

803: The network device #1 obtains a time domain position of a first window based on a time domain position of the first message.

In a possible implementation, the time domain position of the first window and the time domain position of the first message meet a predefined relationship. An example of step 803 is as follows: The network device #1 obtains the time domain position of the first window based on the time domain position of the first message and the predefined relationship.

In a possible implementation, the first window is a time window used by the network device #1 to send a second message, and the first window may include one or more time units. The time domain position of the first window is a time domain position of the second message. The time domain position of the second message (namely, the time domain position of the first window) and the time domain position of the first message meet a predefined relationship. Step 803 may be replaced with the following: The network device #1 obtains a time domain position of a second message based on a time domain position of the first message.

804: The network device #1 sends, in the first window, a second message to the terminal device.

Correspondingly, the terminal device receives the second message from the network device #1. For step 804, refer to step 502. The second message may be a random access response message, namely, a Msg 2. The first window includes k time units used by a cell to which the first random access preamble belongs to send the second message.

805: The network device #2 detects the received first message using a logical root sequence that is not of a local cell, and determines that a random access preamble not belonging to the local cell is received.

A sequence of step 805 and step 802 is not limited. In step 805, the logical root sequence that is not of the local cell may be a logical root sequence that is stored or configured by the network device #2 and that belongs to a neighboring cell (including the cell managed by the network device #1) of a cell managed by the network device #2. Step 805 may be replaced with the following: The network device #2 detects, using a logical root sequence that is not of a local cell, a random access preamble not belonging to the local cell. The local cell in step 805 is a cell managed by the network device #2. A possible implementation of step 805 is as follows: The network device #2 first detects the received first message using a logical root sequence of a local cell, after failing to detect a random access preamble belonging to the local cell, detects the received first message using a logical root sequence that is not of the local cell (including the cell managed by the network device #1), and determines that a random access preamble not belonging to the local cell (namely, the cell managed by the network device #2) is received.

806: The network device #2 obtains the time domain position of the first window based on the time domain position of the first message.

In a possible implementation, the time domain position of the first window and the time domain position of the first message meet the predefined relationship. An example of step 806 is as follows: The network device #2 obtains the time domain position of the first window based on the time domain position of the first message and the predefined relationship.

In a possible implementation, the first window is a time window used by the network device #1 to send the second message, and the first window may include one or more time units. The time domain position of the second message (namely, the time domain position of the first window) and the time domain position of the first message meet the predefined relationship. Step 806 may be replaced with the following: The network device #2 obtains the time domain position of the second message based on the time domain position of the first message.

807: The network device #2 performs downlink transmission, where a resource for the downlink transmission does not include a downlink resource in the first window or a downlink resource in the first window and in a beam direction of the first message.

For step 807, refer to step 503.

808: The terminal device sends a Msg 3 to the network device #1.

Correspondingly, the network device #1 receives the Msg 3 from the terminal device. The Msg 3 may carry identifier information of the terminal device.

809: The network device #1 obtains a time domain position of a second window based on the time domain position of the first message or the time domain position of the first window.

The second window includes o time units used by the network device #1 to send a Msg 4, where o is an integer greater than 0. Step 809 may be an operation of obtaining, by the network device #1 based on the time domain position of the first message or the time domain position of the first window, a time window used by the network device #1 to send the Msg 4. The second window and the first window may be non-consecutive in time, thereby reducing impact on the downlink transmission performed by the network device #2. A sequence of step 809 and step 803 or step 804 is not limited. In a possible implementation, the method in FIG. 8 does not include step 809, and step 803 is replaced with the following: The network device #1 obtains a time domain position of a first window based on a time domain position of the first message, and obtains a time domain position of a second window based on the time domain position of the first message or the time domain position of the first window.

In a possible implementation, the time domain position of the second window and the time domain position of the first message meet a predefined relationship #2. That the network device #1 obtains the time domain position of the second window based on the time domain position of the first message may be that the network device #1 obtains the time domain position of the second window based on the time domain position of the first message and the predefined relationship #2. The second window is a time window used by the network device #1 to send a contention resolution message. The time domain position of the second window may be a time domain position of the contention resolution message. For example, the predefined relationship #2 is that a first time unit (namely, a first time unit used for transmission of the Msg 4) in the second window is offset by c time units from a time unit in which the first random access preamble is located or a time unit in which a last symbol of the first random access preamble is located, where a value range of c is *c*₁ ≤ *c* ≤ *c*₂, that is, c is greater than or equal to c₁, c is less than or equal to c₂, and c₁ and c₂ are integers greater than 0. For example, c₁ is 5, and c₂ is 10. For another example, c₁ is 10, and c₂ is 20. For another example, c₁ is 20, and c₂ is 30. An example in which the predefined relationship #2 is that the first time unit in the second window is offset by c (*c*₁ ≤ *c* ≤ *c*₂) time units from the time unit in which the first random access preamble is located or the time unit in which the last symbol of the first random access preamble is located is as follows: An interval between the first time unit in the second window and the time unit in which the first random access preamble is located is not less than 10 time units and not more than 20 time units, that is, c₁ is 11, and c₂ is 21. In the example, it is assumed that the time unit in which the first random access preamble is located is a c₃^{th} time unit. The network device #1 and the network device #2 may determine, based on the first message and the predefined relationship #2, that the first time unit in the second window is any one of a (c₃ + 11)^{th} time unit to a (c₃ + 21)^{th} time unit, where e is an integer greater than 0. The network device #1 may use any one of the (c₃ + 11)^{th} time unit to the (c₃ + 21)^{th} time unit as the first time unit in the second window. The network device #2 may use the (c₃ + 11)^{th} time unit as the first time unit in the second window.

In a possible implementation, the time domain position of the second window and the time domain position of the first window meet the predefined relationship #1. That the network device #1 obtains the time domain position of the second window based on the time domain position of the first window may be that the network device #1 obtains the time domain position of the second window based on the time domain position of the first window and the predefined relationship #1. For details, refer to the related descriptions in Example 3. For example, the first window is a time window used by the network device #1 to transmit a random access response message, and the second window is a time window used by the network device #1 to transmit a contention resolution message. That the time domain position of the second window and the time domain position of the first window meet the predefined relationship #1 may be that a time domain position of the contention resolution message and a time domain position of the random access response message meet the predefined relationship #1. That the network device #1 obtains the time domain position of the second window based on the time domain position of the first window may be that the network device #1 obtains the time domain position of the contention resolution message based on the time domain position of the random access response message.

810: The network device #1 sends, in the second window, a Msg 4 to the terminal device.

Correspondingly, the terminal device receives the Msg 4 from the network device #1.

811: The network device #2 obtains the time domain position of the second window based on the time domain position of the first message or the time domain position of the first window.

An implementation of step 811 is similar to an implementation of step 809. Details are not described herein again.

812: The network device #2 performs downlink transmission, where a resource for the downlink transmission does not include a downlink resource in the second window or a downlink resource in the second window and in the beam direction of the first message.

The first window is a moment or a time range. The second window is a moment or a time range. The network device #1 sends, in the first window, the second message, namely, the Msg 2, to the terminal device, and sends, in the second window, the Msg 4 to the terminal device. In other words, the network device #1 performs transmission of the Msg 2 and the Msg 4 at a fixed moment or within a time range.

In this embodiment of this application, the network device #1 performs the transmission of the Msg 2 and the Msg 4 at a fixed moment or within a time range. The network device #2 detects a random access preamble that is not of a local cell using a logical root sequence that is not of the local cell, and does not perform downlink transmission at a moment corresponding to the Msg 2 and the Msg 4 or within a time range corresponding to the Msg 2 and the Msg 4, or does not perform downlink transmission in a beam direction of the random access preamble. This can avoid interference to a random access procedure of the terminal device, and can improve a random access success rate.

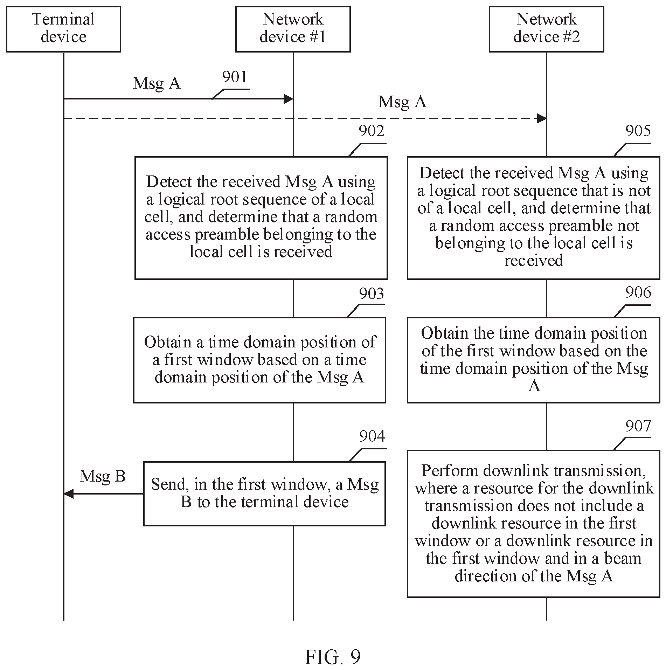

FIG. 9 is a flowchart of another communication method according to an embodiment of this application. The method procedure in FIG. 9 is a possible implementation of the method described in FIG. 5. As shown in FIG. 9, the method includes the following steps.

901: A terminal device sends a Msg A to a network device #1.

Correspondingly, the network device #1 receives the Msg A from the terminal device, and a network device #2 receives the Msg A from the terminal device. A dashed arrow in FIG. 9 indicates that the network device #2 receives the Msg A from the terminal device. The Msg A may include a first random access preamble. The Msg A may be an example of the first message in FIG. 5. For step 901 to step 907, refer to step 801 to step 807. Details are not described herein again.

902: The network device #1 detects the received Msg A using a logical root sequence of a local cell, and determines that a random access preamble belonging to the local cell is received.

903: The network device #1 obtains a time domain position of a first window based on a time domain position of the Msg A.

The first window includes k time units used by the network device #1 to send a Msg B. Step 903 may be an operation of determining, by the network device #1, a time window used by the network device #1 to transmit the Msg B. The Msg B is an example of the second message in FIG. 5.

904: The network device #1 sends, in the first window, a Msg B to the terminal device.

Correspondingly, the terminal device receives the Msg B from the network device #1.

905: The network device #2 detects the received Msg A using a logical root sequence that is not of a local cell, and determines that a random access preamble not belonging to the local cell is received.

A sequence of step 905 and step 902 is not limited.

906: The network device #2 obtains the time domain position of the first window based on the time domain position of the Msg A.

907: The network device #2 performs downlink transmission, where a resource for the downlink transmission does not include a downlink resource in the first window or a downlink resource in the first window and in a beam direction of the Msg A.

The first window is a moment or a time range. That the network device #1 sends, in the first window, the Msg B to the terminal device indicates that the network device #1 performs transmission of the Msg B at a fixed moment or within a time range.

In this embodiment of this application, the network device #1 performs the transmission of the Msg B at a fixed moment or within a time range. The network device #2 detects a random access preamble that is not of a local cell using a logical root sequence that is not of the local cell, and does not perform downlink transmission at a moment corresponding to the Msg B or within a time range corresponding to the Msg B, or does not perform downlink transmission in a beam direction of the random access preamble. This can avoid interference to a random access procedure of the terminal device, and can improve a random access success rate.

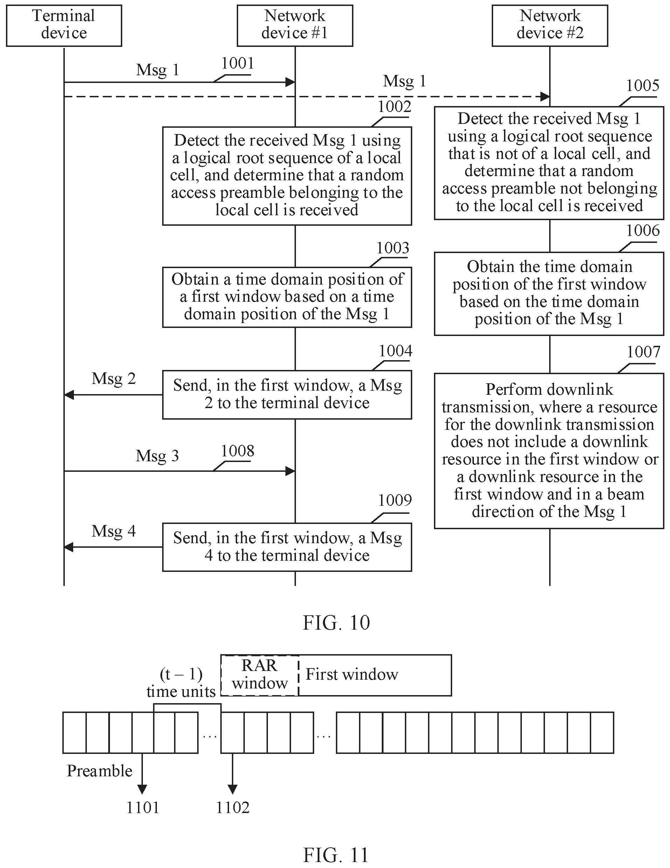

FIG. 10 is a flowchart of another communication method according to an embodiment of this application. The method procedure in FIG. 10 is a possible implementation of the method described in FIG. 5. As shown in FIG. 10, the method includes the following steps.

1001: A terminal device sends a Msg 1 to a network device #1.

Correspondingly, the network device #1 receives the Msg 1 from the terminal device, and a network device #2 receives the Msg 1 from the terminal device. A dashed arrow in FIG. 10 indicates that the network device #2 receives the Msg 1 from the terminal device. The Msg 1 may include a first random access preamble. The Msg 1 may be an example of the first message in FIG. 5. Step 1001 may be an example of step 501.

1002: The network device #1 detects the received Msg 1 using a logical root sequence of a local cell, and determines that a random access preamble belonging to the local cell is received.

For step 1002, refer to step 802.

1003: The network device #1 obtains a time domain position of a first window based on a time domain position of the Msg 1.

The first window includes k time units used by the network device #1 to send a Msg 2 and s time units used to send a Msg 4. For example, the time units in the first window are consecutive in time. The first window may include an RAR window.

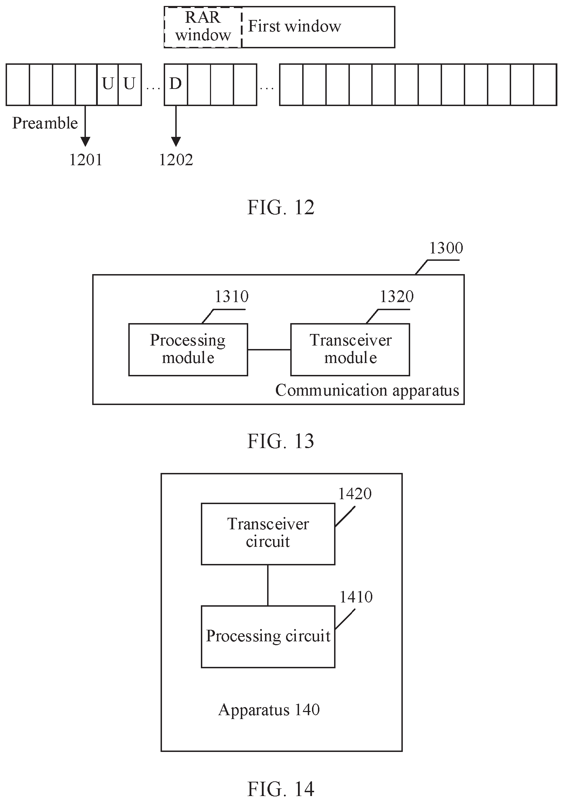

The time domain position of the first window and the time domain position of the Msg 1 meet a predefined relationship. For the predefined relationship that the time domain position of the first window and the time domain position of the Msg 1 meet, refer to the descriptions of the predefined relationship in Example 4. Details are not described herein again. FIG. 11 is an example of a time domain position of a first window and a time domain position of a Msg 1 according to an embodiment of this application. As shown in FIG. 11, a time unit indicated by an arrow 1101 is a time unit in which the first random access preamble (namely, the preamble in FIG. 11) is located, a time unit indicated by an arrow 1102 is a first time unit in the first window, and the first time unit in the first window is offset by t time units from the time unit in which the first random access preamble is located, that is, there is an interval of (t - 1) time units between the first time unit in the first window and the time unit in which the first random access preamble is located, where t is a predefined integer greater than 0, for example, t is 3, 4, 5, 6, 10, or the like. FIG. 12 is another example of a time domain position of a first window and a time domain position of a Msg 1 according to an embodiment of this application. As shown in FIG. 12, a time unit indicated by an arrow 1201 is a time unit in which the first random access preamble (namely, the preamble in the figure) is located, a time unit indicated by an arrow 1202 is a first downlink time unit after the network device #1 sends the Msg 1, and a start position of the first window is the first downlink time unit after the network device #1 sends the Msg 1.

In Example 4, an implementation in which the network device #1 determines the first window based on the first message and the predefined relationship is described. Details are not described herein again.

1004: The network device #1 sends, in the first window, a Msg 2 to the terminal device.

Correspondingly, the terminal device receives the Msg 2 from the network device #1. For step 1004, refer to step 502. The second message may be a random access response message, namely, the Msg 2.

1105: The network device #2 detects the received Msg 1 using a logical root sequence that is not of a local cell, and determines that a random access preamble not belonging to the local cell is received.

For step 1105, refer to step 805. A sequence of step 1105 and step 1102 is not limited.

1006: The network device #2 obtains the time domain position of the first window based on the time domain position of the Msg 1.

In Example 4, an implementation in which the network device #2 determines the first window based on the first message and the predefined relationship is described. Details are not described herein again. Step 1006 may be an operation of obtaining, by the network device #2, a time window used by the network device #1 to perform transmission of the Msg 1 and the Msg 2.

1007: The network device #2 performs downlink transmission, where a resource for the downlink transmission does not include a downlink resource in the first window or a downlink resource in the first window and in a beam direction of the Msg 1.

A sequence of step 1107 and step 1008 is not limited. A sequence of step 1107 and step 1004 is not limited.

1008: The terminal device sends a Msg 3 to the network device #1.

Correspondingly, the network device #1 receives the Msg 3 from the terminal device.

1009: The network device #1 sends, in the first window, a Msg 4 to the terminal device.

Correspondingly, the terminal device receives the Msg 4 from the network device #1.

In this embodiment of this application, the first window is a time window used by the network device #1 to perform transmission of the Msg 1 and the Msg 2. After detecting a random access preamble that is not of a local cell, the network device #2 does not perform downlink transmission in the first window or does not perform downlink transmission in a beam direction of the random access preamble. This can avoid interference to a random access procedure of the terminal device, and can improve a random access success rate.

The following describes, with reference to the accompanying drawings, structures of communication apparatuses that can implement the communication methods provided in embodiments of this application. The following briefly describes only the communication apparatuses. For details about solution implementation, refer to the descriptions in the foregoing method embodiments. Details are not described below again.

FIG. 13 is a diagram of a structure of a communication apparatus 1300 according to an embodiment of this application. The communication apparatus 1300 may correspondingly implement functions or steps implemented by the terminal device in the foregoing method embodiments, or may correspondingly implement functions or steps implemented by the network device #1 in the foregoing method embodiments, or may correspondingly implement functions or steps implemented by the network device #2 in the foregoing method embodiments. The communication apparatus may include a processing module 1310 and a transceiver module 1320. In a possible implementation, the communication apparatus may further include a storage unit. The storage unit may be configured to store instructions (code or a program) and/or data. The processing module 1310 and the transceiver module 1320 may be coupled to the storage unit. For example, the processing module 1310 may read the instructions (the code or the program) and/or the data in the storage unit, to implement a corresponding method. The foregoing units may be independently disposed, or may be partially or completely integrated. For example, the transceiver module 1320 may include a sending module and a receiving module. The sending module may be a transmitter, and the receiving module may be a receiver. An entity corresponding to the transceiver module 1320 may be a transceiver circuit, for example, a transceiver or a communication interface.

In some possible implementations, the communication apparatus 1300 can correspondingly implement behavior and functions of the terminal device in the foregoing method embodiments. For example, the communication apparatus 1300 may be a terminal device, or may be a component (for example, a chip or a circuit) used in the terminal device. For example, the transceiver module 1320 may be configured to perform all receiving or sending operations performed by the terminal device in the embodiments in FIG. 5, FIG. 8, FIG. 9, and FIG. 10. For example, the processing module 1310 may be configured to perform all operations other than the receiving or sending operations performed by the terminal device in the embodiments in FIG. 5, FIG. 8, FIG. 9, and FIG. 10.

In some possible implementations, the communication apparatus 1300 can correspondingly implement behavior and functions of the network device #1 in the foregoing method embodiments. For example, the communication apparatus 1300 may be a network device #1, or may be a component (for example, a chip or a circuit) used in the network device #1. For example, the transceiver module 1320 may be configured to perform all receiving or sending operations performed by the network device #1 in the embodiments in FIG. 5, FIG. 8, FIG. 9, and FIG. 10. For example, the processing module 1310 may be configured to perform all operations other than the receiving or sending operations performed by the network device #1 in the embodiments in FIG. 5, FIG. 8, FIG. 9, and FIG. 10.

In some possible implementations, the communication apparatus 1300 can correspondingly implement behavior and functions of the network device #2 in the foregoing method embodiments. For example, the communication apparatus 1300 may be a network device #2, or may be a component (for example, a chip or a circuit) used in the network device #2. For example, the transceiver module 1320 may be configured to perform all receiving or sending operations performed by the network device #2 in the embodiments in FIG. 5, FIG. 8, FIG. 9, and FIG. 10. For example, the processing module 1310 may be configured to perform all operations other than the receiving or sending operations performed by the network device #2 in the embodiments in FIG. 5, FIG. 8, FIG. 9, and FIG. 10.

FIG. 14 is a diagram of a structure of another apparatus 140 according to an embodiment of this application. The apparatus in FIG. 14 may be the terminal device or a chip used for the terminal device, or may be the network device #1 or a chip used for the network device #1, or may be the network device #2 or a chip used for the network device #2. As shown in FIG. 14, the apparatus 140 includes a processing circuit 1410 and a transceiver circuit 1420.

In some embodiments of this application, the processing circuit 1410 and the transceiver circuit 1420 may be configured to perform functions, operations, or the like performed by the terminal device. For example, the transceiver circuit 1420 is configured to perform all receiving or sending operations performed by the terminal device in the embodiments in FIG. 5, FIG. 8, FIG. 9, and FIG. 10 For example, the processing circuit 1410 is configured to perform all operations other than the receiving or sending operations performed by the terminal device in the embodiments in FIG. 5, FIG. 8, FIG. 9, and FIG. 10.

In some embodiments of this application, the processing circuit 1410 and the transceiver circuit 1420 may be configured to perform functions, operations, or the like performed by the network device #1. For example, the transceiver circuit 1420 is configured to perform all receiving or sending operations performed by the network device #1 in the embodiments in FIG. 5, FIG. 8, FIG. 9, and FIG. 10. For example, the processing circuit 1410 is configured to perform all operations other than the receiving or sending operations performed by the network device #1 in the embodiments in FIG. 5, FIG. 8, FIG. 9, and FIG. 10.

In some embodiments of this application, the processing circuit 1410 and the transceiver circuit 1420 may be configured to perform functions, operations, or the like performed by the network device #2. For example, the transceiver circuit 1420 is configured to perform all receiving or sending operations performed by the network device #2 in the embodiments in FIG. 5, FIG. 8, FIG. 9, and FIG. 10. For example, the processing circuit 1410 is configured to perform all operations other than the receiving or sending operations performed by the network device #2 in the embodiments in FIG. 5, FIG. 8, FIG. 9, and FIG. 10.

In a possible implementation, the transceiver circuit 1420 includes at least one transceiver, and the processing circuit 1410 includes at least one processor or a circuit that is in at least one processor and that is used for processing or control.

The transceiver is configured to communicate with another device/apparatus through a transmission medium. The processor sends and receives data and/or signaling through the transceiver, and is configured to implement the methods in the foregoing method embodiments. The processor may implement a function of the processing module 1310, and the transceiver may implement a function of the transceiver module 1320. Optionally, the transceiver may include a radio frequency circuit and an antenna. The radio frequency circuit is mainly configured to: perform conversion between a baseband signal and a radio frequency signal, and process the radio frequency signal. The antenna is mainly configured to send and receive a radio frequency signal in a form of an electromagnetic wave. An input/output apparatus, such as a touchscreen, a display, or a keyboard, is mainly configured to: receive data input by a user and output data to the user.

Optionally, the apparatus 140 may further include at least one memory, configured to store program instructions and/or data. The memory is coupled to the processor. The coupling in this embodiment of this application may be an indirect coupling or a communication connection between apparatuses, units, or modules in an electrical form, a mechanical form, or another form, and is used for information exchange between the apparatuses, the units, or the modules. The processor may cooperatively operate with the memory. The processor may execute the program instructions stored in the memory. At least one of the at least one memory may be included in the processor.

The processor may read a software program in the memory, interpret and execute instructions of the software program, and process data of the software program. When data needs to be sent in a wireless manner, the processor performs baseband processing on the to-be-sent data, and then outputs a baseband signal to a radio frequency circuit, and the radio frequency circuit performs radio frequency processing on the baseband signal, and then sends a radio frequency signal to an outside in a form of an electromagnetic wave through the antenna. When data is sent to the apparatus 140, the radio frequency circuit receives a radio frequency signal through the antenna, converts the radio frequency signal into a baseband signal, and outputs the baseband signal to the processor; and the processor converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the apparatus 140.

A specific connection medium between the transceiver, the processor, and the memory is not limited in this embodiment of this application.

In this embodiment of this application, the processor may be one of the following components: a general-purpose processor, a digital signal processor, an application-specific integrated circuit, a field-programmable gate array or another programmable logic device, a discrete gate or a transistor logic device, a discrete hardware component, or all or some circuits used for processing functions in the foregoing components. The processor may implement or perform the methods, the steps, and the logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In a possible implementation, the processing circuit 1410 includes at least one logic circuit, and the transceiver circuit 1420 includes at least one interface. The processing module 1310 in FIG. 13 may be implemented by using a logic circuit, and the transceiver module 1320 in FIG. 13 may be implemented by using an interface. The logic circuit may be a chip, a processing circuit, an integrated circuit, a system-on-chip (system-on-chip, SoC), or the like, and the interface may be a communication interface, an input/output interface, or the like. In this embodiment of this application, the logic circuit and the interface may be coupled to each other. A specific manner of connection between the logic circuit and the interface is not limited in this embodiment of this application.

This application further provides a computer-readable storage medium. The computer-readable storage medium stores a computer program or instructions. When the computer program or the instructions are run on a computer, the computer is caused to perform the methods in the foregoing embodiments.

This application further provides a computer program product. The computer program product includes instructions or a computer program. When the instructions or the computer program is run on a computer, the methods in the foregoing embodiments are performed.

This application further provides a communication system, including the foregoing network device #1, the foregoing network device #2, and the foregoing terminal device.

This application further provides a chip. The chip includes a communication interface and a processor. The communication interface is configured to send and receive a signal of the chip. The processor is configured to execute computer program instructions, so that a communication apparatus including the chip performs the methods in the foregoing embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of procedures or functions described in embodiments of this application are performed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, that integrates one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A communication method, comprising:
receiving a first message, wherein the first message comprises a first random access preamble; and
performing downlink transmission, wherein a resource for the downlink transmission does not comprise a downlink resource in a first window or a downlink resource in a first window and in a beam direction of the first message, the first window comprises k time units used by a cell to which the first random access preamble belongs to send a second message, the second message and the first message belong to a same random access procedure, and k is an integer greater than 0.

2. The method according to claim 1, wherein the method is applied to an entity corresponding to a first cell, and the first random access preamble does not belong to a random access preamble of the first cell.

3. The method according to claim 1 or 2, wherein a time domain position of the first window and a time domain position of the first message meet a predefined relationship.

4. The method according to claim 3, wherein the method further comprises:
obtaining the time domain position of the first window based on the predefined relationship and the time domain position of the first message.

5. The method according to claim 3 or 4, wherein the second message is a random access response message or a contention resolution message, a first time unit in the first window is offset by f time units from a time unit in which the first random access preamble is located or a time unit in which a last symbol of the first random access preamble is located, and f is a predefined integer greater than 0.

6. The method according to claim 1 or 2, wherein the second message is a contention resolution message, a first time unit in the k time units is offset by h time units from a time unit in which a random access response message is located or a time unit in which a last symbol of the random access response message is located, the random access response message and the second message belong to a same random access procedure, and h is a predefined integer greater than 0.

7. The method according to claim 6, wherein a first time unit used by the cell to which the first random access preamble belongs to send the random access response message is offset by g time units from a time unit in which the first random access preamble is located or a time unit in which a last symbol of the first random access preamble is located, and g is a predefined integer greater than 0.

8. The method according to claim 1 or 2, wherein the first window is a random access response window, and the second message is a random access response message.

9. The method according to claim 1 or 2, wherein the second message is a random access response message, the first window further comprises s time units used by the cell to which the first random access preamble belongs to send a contention resolution message, the contention resolution message and the first message belong to a same random access procedure, and s is an integer greater than 0.

10. The method according to claim 9, wherein a start position of the first window is offset by t time units from a time unit in which the first random access preamble is located or a time unit in which a last symbol of the first random access preamble is located, and t is a predefined integer greater than 0; or a start position of the first window is a first downlink time unit after the cell to which the first random access preamble belongs sends the first message.

11. The method according to any one of claims 1 to 9, wherein the method further comprises: detecting the received first message using a logical root sequence that is not of the first cell.

12. The method according to any one of claims 1 to 11, wherein the method is applied to a communication scenario in which a plurality of network devices are comprised, and at least two of the plurality of network devices cannot directly exchange information.

13. The method according to any one of claims 1 to 12, wherein the method is applied to any one of the following multi-node resource multiplexing scenarios: relay, a wireless mesh network, integrated access and backhaul IAB, an ad hoc network, or a communication scenario comprising mobile IAB and/or a mobile base station.

14. A communication method, comprising:
receiving a first message, wherein the first message comprises a first random access preamble; and
sending, in a first window, a second message, wherein the second message and the first message belong to a same random access procedure, a time domain position of the first window and a time domain position of the first message meet a predefined relationship, and the second message is a contention resolution message.

15. The method according to claim 14, wherein the method further comprises:
sending, in the first window, a random access response message, wherein the random access response message and the first message belong to a same random access procedure.

16. The method according to claim 14 or 15, wherein a first time unit in the first window is offset by f time units from a time unit in which the first random access preamble is located or a time unit in which a last symbol of the first random access preamble is located, and f is a predefined integer greater than 0.

17. The method according to any one of claims 14 to 16, wherein the method is applied to a communication scenario in which a plurality of network devices are comprised, and at least two of the plurality of network devices cannot directly exchange information.

18. The method according to any one of claims 14 to 17, wherein the method is applied to any one of the following multi-node resource multiplexing scenarios: relay, a wireless mesh network, integrated access and backhaul IAB, an ad hoc network, or a communication scenario comprising mobile IAB and/or a mobile base station.

19. A communication method, comprising:
sending a first message, wherein the first message comprises a first random access preamble; and
receiving a second message, wherein the second message and the first message belong to a same random access procedure, the second message is sent in a first window by a cell to which the first random access preamble belongs, a time domain position of the first window and a time domain position of the first message meet a predefined relationship, and the second message is a contention resolution message.

20. The method according to claim 19, wherein the method further comprises:
receiving a random access response message, wherein the random access response message is sent in the first window by the cell to which the first random access preamble belongs, and the random access response message and the first message belong to a same random access procedure.

21. The method according to claim 19 or 20, wherein a first time unit in the first window is offset by f time units from a time unit in which the first random access preamble is located or a time unit in which a last symbol of the first random access preamble is located, and f is a predefined integer greater than 0.

22. The method according to any one of claims 19 to 21, wherein the method is applied to a communication scenario in which a plurality of network devices are comprised, and at least two of the plurality of network devices cannot directly exchange information.

23. The method according to any one of claims 19 to 21, wherein the method is applied to any one of the following multi-node resource multiplexing scenarios: relay, a wireless mesh network, integrated access and backhaul IAB, an ad hoc network, or a communication scenario comprising mobile IAB and/or a mobile base station.

24. A communication method, comprising:
receiving a first message, wherein the first message comprises a first random access preamble; and
sending a second message, wherein the second message and the first message belong to a same random access procedure, a time domain position of the second message and a time domain position of the first message meet a predefined relationship, a first time unit used for transmission of the second message is offset by y time units from a time unit in which the first random access preamble is located or a time unit in which a last symbol of the first random access preamble is located, and y is a predefined integer greater than 0.

25. The method according to claim 24, wherein the second message is a random access response message, and the method further comprises: sending a contention resolution message, wherein the contention resolution message and the first message belong to a same random access procedure, and a time domain position of the contention resolution message and the time domain position of the first message meet a predefined relationship, or a time domain position of the contention resolution message and the time domain position of the second message meet a predefined relationship.

26. A communication method, comprising:
sending a first message, wherein the first message comprises a first random access preamble; and
receiving a second message, wherein the second message and the first message belong to a same random access procedure, a time domain position of the second message and a time domain position of the first message meet a predefined relationship, a first time unit used for transmission of the second message is offset by y time units from a time unit in which the first random access preamble is located or a time unit in which a last symbol of the first random access preamble is located, and y is a predefined integer greater than 0.

27. The method according to claim 26, wherein the second message is a random access response message, and the method further comprises: receiving a contention resolution message, wherein the contention resolution message and the first message belong to a same random access procedure, and a time domain position of the contention resolution message and the time domain position of the first message meet a predefined relationship, or a time domain position of the contention resolution message and the time domain position of the second message meet a predefined relationship.

28. A communication method, comprising: receiving a first message, wherein the first message comprises a first random access preamble; and sending, in a first window, a random access response message and a contention resolution message, wherein the first message, the random access response message, and the contention resolution message belong to a same random access procedure, and a time domain position of the first window and a time domain position of the first message meet a predefined relationship.

29. The method according to claim 28, wherein a start position of the first window is offset by w time units from a time unit in which the first random access preamble is located or a time unit in which a last symbol of the first random access preamble is located, and w is a predefined integer greater than 0; or a start position of the first window is a first time unit after a cell to which the first random access preamble belongs sends the first message.

30. A communication method, comprising: sending a first message, wherein the first message comprises a first random access preamble; and receiving, in a first window, a random access response message and a contention resolution message, wherein the first message, the random access response message, and the contention resolution message belong to a same random access procedure, and a time domain position of the first window and a time domain position of the first message meet a predefined relationship.

31. The method according to claim 30, wherein a start position of the first window is offset by w time units from a time unit in which the first random access preamble is located or a time unit in which a last symbol of the first random access preamble is located, and w is a predefined integer greater than 0; or a start position of the first window is a first time unit after a cell to which the first random access preamble belongs sends the first message.

32. A communication apparatus, comprising a module configured to implement the method according to any one of claims 1 to 13, any one of claims 14 to 18, any one of claims 19 to 23, either of claims 24 and 25, either of claims 26 and 27, either of claims 28 and 29, or either of claims 30 and 31.

33. A computer-readable storage medium, wherein the computer-readable storage medium stores a computer program, the computer program comprises program instructions, and when the program instructions are executed, a computer is caused to perform the method according to any one of claims 1 to 31.

34. A computer program product, wherein the computer program product comprises a computer program, the computer program comprises program instructions, and when the program instructions are executed, a computer is caused to perform the method according to any one of claims 1 to 31.

35. A chip, comprising a communication interface and a processor, wherein the communication interface is configured to receive and send a signal of the chip, and the processor is configured to execute computer program instructions, so that a communication apparatus comprising the chip performs the method according to any one of claims 1 to 31.

36. A communication apparatus, comprising a processor, wherein the processor is coupled to a memory, the memory is configured to store a computer program or instructions, and the processor is configured to execute the computer program or the instructions in the memory, to cause the communication apparatus to perform the method according to any one of claims 1 to 31.
